# EUROPEAN PATENT APPLICATION

(11) **EP 1 594 028 A2**
(43) Date of publication of application: **09.11.2005**
(21) Application number: 05007333.7
(22) Date of filing: 04.04.2005
(51) Int. Cl.: G06F 1/00

(54) **Content sharing system, content reproduction apparatus, content recording apparatus, server managing apparatus groups, and content reproduction controlling method**

(30) Priority: 09.04.2004 JP 2004116274
(71) Applicant: SONY CORPORATION, Tokyo (JP)
(72) Inventor: Kuno, Hiroshi, Shinagawa-ku, Tokyo (JP); Tanabe, Mitsuru, Shinagawa-ku, Tokyo (JP); Ebihara, Munetake, Shinagawa-ku, Tokyo (JP); Sato, Ichiro, Shinagawa-ku, Tokyo (JP); Nagano, Motohiko, Shinagawa-ku, Tokyo (JP); Soma, Shunichi, Shinagawa-ku, Tokyo (JP); Ichikawa, Hiroyuki, Shinagawa-ku, Tokyo (JP)
(74) Representative: Körber, Martin Hans

(57) **Abstract**

A content sharing system (100) is disclosed that can efficiently execute copyright management and can promote the degree of freedom and convenience in sharing of content within a legal range of private utilization. A group management server places (20) a plurality of content processing apparatuses (10) in terms of a unit of an owner into a group registration and issues a notification of a group ID of the group. A content recording apparatus adds a recorder ID thereof to production content produced thereby. Further, a content reproduction apparatus controls reproduction of content based on a recorder ID read out from content and a reproduction permission ID list. If the different processing apparatuses have the same group ID, the recorder ID can be added to the reproduction permission ID list.

## Description

### BACKGROUND

This invention relates to a content sharing system wherein content data is shared among a plurality of content processing apparatuses, and also to a content reproduction apparatus, a content recording apparatus, a group management server, a program, and to a content reproduction controlling method for use with the content sharing system.

Different from conventional analog content, digital content of music and so forth can be copied multiple times without suffering from any quality deterioration. Therefore, in recent years, with the progress of the popularization of the Internet and the increase in speed of operation and capacity of personal computers, illegal distribution, exchange, and so forth of content without its copyright owner's permission is increasing.

In order to prevent such illegal actions, a copyright management system, which utilizes a DRM (Digital Rights Management) technique that places limitations on the distribution and utilization of content, is being popularized. In a copyright management system of the type described, usually the number of copies of original content items is managed strictly to restrict illegal copying, as proposed in the SDMI (Secure Digital Music Initiative) and so forth. One such copyright management system is disclosed in Japanese Patent Laid-Open No. 2003-296486 (hereinafter referred to as Patent Document 1).

Such a copyright management system, wherein the number of copies of original content items is managed strictly as described above, is inefficient in that every time copying of content is to be performed between different apparatuses, a connection to a management server which manages the total number of copies must be established to execute a copyright management process. Accordingly, the degree of content utilization freedom is low, and particularly to a legal user of content (that is, to a person who utilizes content within a range of private use) the copyright management system design freedom is low and inconvenient in a case where content is shared between a plurality of apparatuses owned by the user.

Further, it is considered that people prefer a conventional distribution system of analog content, which acknowledges unlimited copying as long as the content is utilized for private use, to a system that strictly manages the total number of copies. Therefore, a digital content management system that provides the benefit of an analog content system is desired.

### SUMMARY

It is an object of the present invention to provide a novel and improved content sharing system, and associated apparatus and methods, that can efficiently execute copyright management for limiting illegal utilization of content, and can promote the degree of freedom and convenience in sharing of content within a legal range of private utilization.

In order to attain the object described above, in accordance with a first aspect of the present invention there is provided a content sharing system, including a plurality of content processing apparatuses for recording and/or reproducing content data, and a group management server for placing the content processing apparatuses into group registrations, the content data being shared between those content processing apparatuses that are placed in the same group registration, a recorder ID being applied uniquely in terms of a content recording apparatus that can record content data and a group ID is applied uniquely in terms of a user who owns any of the content processing apparatuses, the group management server including a user authentication section for authenticating, in response to a request for registration from any of the content processing apparatuses, a user who owns the content processing apparatus of the source of the request for registration, an apparatus registration section for registering the content processing apparatus of the source of the request for registration into the apparatus group owned by the authenticated user, and a group ID notification section for issuing a notification of the group ID corresponding to the authenticated user to the registered content processing apparatus, the content processing apparatus including a content recording apparatus that can record content data and a content reproduction apparatus that can reproduce content data, the content recording apparatus including a content production section for producing content data, and a recorder ID addition section for adding the recorder ID of the content recording apparatus to the content data produced by the content production section, the content reproduction apparatus including storage means for storing a first group ID corresponding to a user who owns the content reproduction apparatus and a reproduction permission ID list, a list management section for determining whether or not a second group ID corresponding to a user who owns the content recording apparatus and the first group ID coincide with each other and adding, if the second group ID and the first group ID coincide with each other, the recorder ID of the content recording apparatus to the reproduction permission ID list, and a reproduction control section for reading out a recorder ID added to content data, determining whether or not the recorder ID read out is included in the reproduction permission ID list and permitting, if the recorder ID read out is included in the reproduction permission ID list, reproduction of the content data but limiting, if the recorder ID read out is not included in the reproduction permission ID list, reproduction of the content data.

In accordance with a second aspect of the present invention, there is provided a content reproduction apparatus for controlling reproduction of content data based on a group ID applied uniquely in terms of a unit of a user who owns a content processing apparatus and a recorder ID applied uniquely in terms of a unit of a content recording apparatus that can record content data, including storage means for storing a first group ID corresponding to a user who owns the content reproduction apparatus and a reproduction permission ID list, a list management section for determining whether or not a second group ID corresponding to a user who owns a different content recording apparatus and the first group ID coincide with each other and adding, if the second group ID and the first group ID coincide with each other, the recorder ID of the different content recording apparatus to the reproduction permission ID list, and a reproduction control section for reading out a recorder ID added to content data, determining whether or not the recorder ID read out is included in the reproduction permission ID list and permitting, if the recorder ID read out is included in the reproduction permission ID list, reproduction of the content data but limiting, if the recorder ID read out is not included in the reproduction permission ID list, reproduction of the content data.

In accordance with a third aspect of the present invention, there is provided a content recording apparatus that can record content data, including storage means for storing a first group ID corresponding to a user who owns the content recording apparatus from among group IDs applied uniquely in terms of a unit of a user who owns a content processing apparatus and a recorder ID of the content recording apparatus from among recorder IDs applied uniquely in a unit of a content recording apparatus, a content production section for producing content data, a recorder ID addition section for adding the recorder ID of the content recording apparatus to the content data produced by the content production section, and a certificate issuing section for issuing a group certificate wherein the first group ID and the recorder ID of the content recording apparatus.

In accordance with a fourth aspect of the present invention, there is provided a group management server for placing a plurality of content processing apparatuses that record and/or reproduce content data into group registrations, including a recorder ID being applied uniquely in terms of a unit of a content recording apparatus that can record content data among the content processing apparatuses and a group ID is applied uniquely in terms of a unit of a user who owns any of the content processing apparatuses, a user authentication section for authenticating, in response to a request for registration from any of the content processing apparatuses, a user who owns the content processing apparatus of the source of the request for registration, an apparatus registration section for registering the content processing apparatus of the source of the request for registration into the apparatus group owned by the authenticated user, a group ID notification section for issuing a notification of the group ID corresponding to the authenticated user to the registered content processing apparatus, and a certificate issuing section for issuing a group certificate comprising a group ID, of which content recording apparatus from among the registered content recording apparatus are notified, and the recorder IDs of the content recording apparatus are coordinated with each other.

In accordance with a fifth aspect of the present invention, there is provided a program for causing a content reproduction apparatus to execute a list updating process of determining whether or not a first group ID corresponding to a user who owns the content reproduction apparatus from among group IDs applied uniquely in terms of a unit of a user who owns any content processing apparatus and a second group ID corresponding to a user who owns a different content recording apparatus coincide with each other and adding, if the first group ID and the second group ID coincide with each other, a recorder ID of the different content recording apparatus from among recorder IDs applied uniquely in terms of a unit of a content recording apparatus that can record content data to a reproduction permission ID list, and a reproduction control section for reading out a recorder ID added to content data, determing whether or not the recorder ID read out is included in the reproduction permission ID list and permitting, if the recorder ID read out is included in the reproduction permission ID list, reproduction of the content data but limiting, if the recorder ID read out is not included in the reproduction permission ID list, reproduction of the content data.

In accordance with a sixth aspect of the present invention, there is provided a program for causing a content recording apparatus to execute a content production process of producing content data, a recorder ID adding process of adding a recorder ID of the content recording apparatus from among recorder IDs applied uniquely in terms of a unit of a content recording apparatus to the content data produced by the content production process, and a certificate issuing process of issuing a group certificate wherein a first group ID, corresponding to a user who owns the content recording apparatus from among group IDs applied uniquely in terms of a unit of a user who owns any content processing apparatus, and the recorder ID of the content recording apparatus are coordinated with each other.

In accordance with a seventh aspect of the present invention, there is provided a program for causing a group management server connected to content processing apparatus to execute a user authentication process of authenticating, in response to a request for registration from any of the content processing apparatuses, a user who owns the content processing apparatus of the source of the request for registration, an apparatus registration process of registering the content processing apparatus of the source of the request for registration into an apparatus group owned by the authenticated user, a group ID notification process of issuing a notification of a group ID corresponding to the authenticated user from among group IDs applied uniquely in terms of a unit of a user who owns any of the content processing apparatuses to the registered content processing apparatus, and a certificate issuing process of issuing a group certificate wherein a group ID, of which content recording apparatuses from among the registered content recording apparatuses are notified, and the recorder IDs of the content recording apparatus are coordinated with each other.

In accordance with an eighth aspect of the present invention, there is provided a content reproduction controlling method for controlling reproduction of content data by a content reproduction apparatus based on a group ID applied uniquely in terms of a unit of a user who owns any of content processing apparatuses, a recorder ID applied uniquely in terms of a unit of a content recording apparatus which can record content data from among the content processing apparatus, and a reproduction permission ID list stored in the content reproduction apparatus, including a step of acquiring a first group ID corresponding to a user who owns the content reproduction apparatus, a step of acquiring a second group ID corresponding to a user who owns a different content recording apparatus different from the content reproduction apparatus, a list updating step of determining whether or not the first group ID and the second group ID coincide with each other and adding, if the first group ID and the second group ID coincide with each other, the recorder ID of the different content recording apparatus to a reproduction permission ID list, and a reproduction control step of reading out a recorder ID added to content data, determining whether or not the recorder ID read out is included in the reproduction permission ID list and permitting, if the recorder ID read out is included in the reproduction permission ID list, reproduction of the content data but limiting, if the recorder ID read out is not included in the reproduction permission ID list, reproduction of the content data.

With the content sharing system, content reproduction apparatus, content recording apparatus, group management server, programs, and content reproduction controlling method, sharing of content data can be managed in terms of a unit of a user who owns a plurality of content processing apparatuses. Consequently, copyright management for limiting illegal utilization of content can be executed efficiently. Simultaneously, the degree of freedom and the convenience in sharing of content within a legal range of private utilization can be promoted.

The above and other objects, features, and advantages of the present invention will become apparent from the following description and the appended claims, taken in conjunction with the accompanying drawings, in which like parts or elements are denoted by like reference symbols.

### BRIEF DESCRIPTION OF THE DRAWINGS

FIG. 1 is a schematic view illustrating an outline of group registration of a content sharing system in accordance with an embodiment of the present invention;
FIG. 2 is a block diagram showing principal components of the content sharing system of FIG. 1;
FIG. 3 is a schematic view illustrating a particular example of content data in the content sharing system of FIG. 1;
FIG. 4 is a block diagram schematically showing a general configuration of the content sharing system of FIG. 1;
FIG. 5 is a block diagram schematically showing a configuration of a content processing apparatus shown in FIG. 1;
FIG. 6 is a diagrammatic view schematically illustrating a configuration of content data, with a recorder ID added thereto, used in the content sharing system of FIG. 1;
FIG. 7 is a diagrammatic view schematically illustrating a configuration of a group certificate used in the content sharing system of FIG. 1;
FIG. 8 is a block diagram schematically showing a configuration of a content reproduction section shown in FIG. 5;
FIG. 9 is a block diagram schematically showing a configuration of a list management section shown in FIG. 5;
FIG. 10 is a block diagram schematically showing a configuration of a distribution and group management server shown in FIG. 1;
FIG. 11 is a view illustrating a data structure of a group registration database shown in FIG. 10;
FIG. 12 is a view illustrating a data structure of the group certificate of FIG. 7;
FIG. 13 is a timing chart illustrating a basic flow of a content sharing method in accordance with an embodiment of the present invention;
FIG. 14 is a schematic view illustrating a content sharing state before group registration in the content sharing system of FIG. 1;
FIG. 15 is a schematic view illustrating a content sharing state after group registration in the content sharing system of FIG. 1;
FIG. 16 is a timing chart illustrating a group registration process in the content sharing system of FIG. 1;
FIG. 17 is a schematic view illustrating a particular example of group registration in the content sharing system of FIG. 1;
FIG. 18 is a schematic view illustrating a particular example of registered unit number limitation in the content sharing system of FIG. 1;

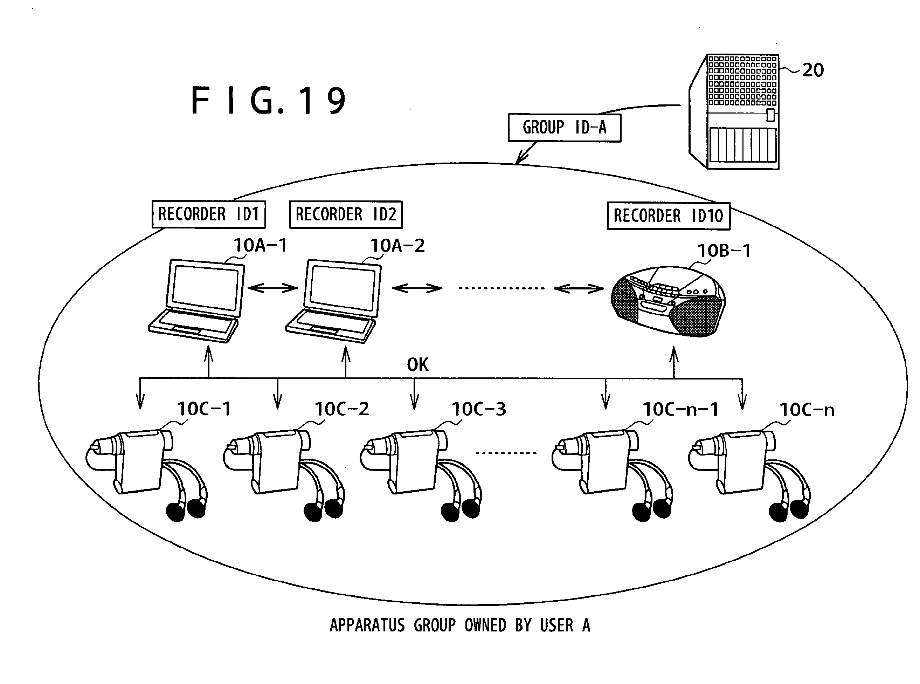

FIG. 19 is a schematic view illustrating another particular example of registered unit number limitation in the content sharing system of FIG. 1;
FIG. 20 is a timing chart illustrating a group registration cancellation process in the content sharing system of FIG. 1;
FIG. 21 is a schematic view illustrating a particular example of group registration/cancellation process in the content sharing system of FIG. 1;
FIG. 22 is a timing chart illustrating a certificate distribution process 1 in the content sharing system of FIG. 1;
FIG. 23 is a timing chart illustrating a certificate distribution process 2 in the content sharing system of FIG. 1;
FIG. 24 is a timing chart illustrating a certificate distribution process 3 in the content sharing system of FIG. 1;
FIG. 25 is a flow chart illustrating a list updating process 1 in the content sharing system of FIG. 1;
FIG. 26 is a schematic view illustrating a particular example of the list updating process 1 of FIG. 25;
FIG. 27 is a flow chart illustrating a list updating process 2 in the content sharing system of FIG. 1;
FIG. 28 is a flow chart illustrating a production content reproduction control process in the content sharing system of FIG. 1;
FIG. 29 is a flow chart illustrating a distribution content reproduction control process in the content sharing system of FIG. 1; and
FIG. 30 is a schematic view illustrating a particular example of a content reproduction control process in the content sharing system of FIG. 1.

### DESCRIPTION OF PREFERRED EMBODIMENTS

First, an outline of a content sharing system in accordance with the present invention is described.

The content sharing system in accordance with the present embodiment is formed as a copyright management system for managing content sharing among a plurality of content processing apparatuses to protect the copyright of the content. In particular, the content sharing system limits content sharing between content processing apparatuses of different users in order to prevent illegal content utilization, such as distributing a great amount of content via the Internet or a like network..

At the same time, the content sharing system implements a content sharing service by which content can be shared freely to some degree between a plurality of content processing apparatuses owned by the same user. The "same user" includes, for example, not only a single user but also a user group within a limited range, such as families, friends, colleagues of a company, and so forth: this meaning applies also to the following description.

In this manner, the content sharing system in accordance with the present embodiment is intended to permit, while performing copyright management, content sharing within the range of private utilization to increase the convenience and the degree of freedom in content sharing between a plurality of content processing apparatuses owned by the same user.

As described above, according to a conventional copyright management system that adopts the SDMI Check Out/Check In system, the number of copies is managed for each individual "content unit" to restrict illegal utilization of content. The system has a drawback, however, since a copyright management process must be performed every time content items are copied between content processing apparatuses, the system configuration is complicated and is low in processing speed, and the degree of freedom in utilization of content within the range of private utilization is low. Further, according to the conventional system of the type described, the user is obliged to utilize the system while it is normally aware of the content source or the number of times the content has been copied. Further, "prevention of copying of content to an apparatus owned by an unrelated person", which is an original object of a copyright management system, is not achieved by the conventional system of the type described.

In contrast, the content sharing system in accordance with the present embodiment is characterized in that the unit of content utilization management is in terms of a unit of (that is, it is defined in terms of or is measured in terms of) a "content providing source" (more particularly, in terms of a "unit of an owner of content" or in terms of a "unit of an apparatus by which content is stored") and that it performs a copyright management process of permitting/rejecting content data reproduction* by a content processing apparatus of the content acquiring side (copy destination) that depends upon the content data providing source. In particular, the content sharing system in accordance with the present embodiment manages content shared in the system in terms of a unit of a content data providing source and limits reproduction of content data on a content processing apparatus on the content acquiring side thereby to perform copyright management of the content.

In addition, the content sharing system in accordance with the present embodiment is characterized in that a group management server is utilized to place a plurality of content processing apparatuses into a group registration in terms of a unit of a user who owns the content processing apparatuses. Copied content can be reproduced freely between the content processing apparatuses placed in a group registration of the same user group.

It is to be noted that the content relating to the present embodiment includes any content such as audio content (including music, a lecture, a radio program, and so forth), video content (including still pictures or moving pictures, which form a movie, a television program, a video program, photographs, pictures, figures, and the like), electronic books (E-books), games, and software. Further, the content data are, for example, digital data representative of the substances of the various content mentioned above and may be, for example, video data, audio data, electronic book data, electronic game data, and software data. In the following description, as an example of content, audio content (MP3 content or the like), particularly music content acquired by ripping, recording by means of recording equipment, or music content distributed from a distribution server are used. However, the present invention is not limited to the examples.

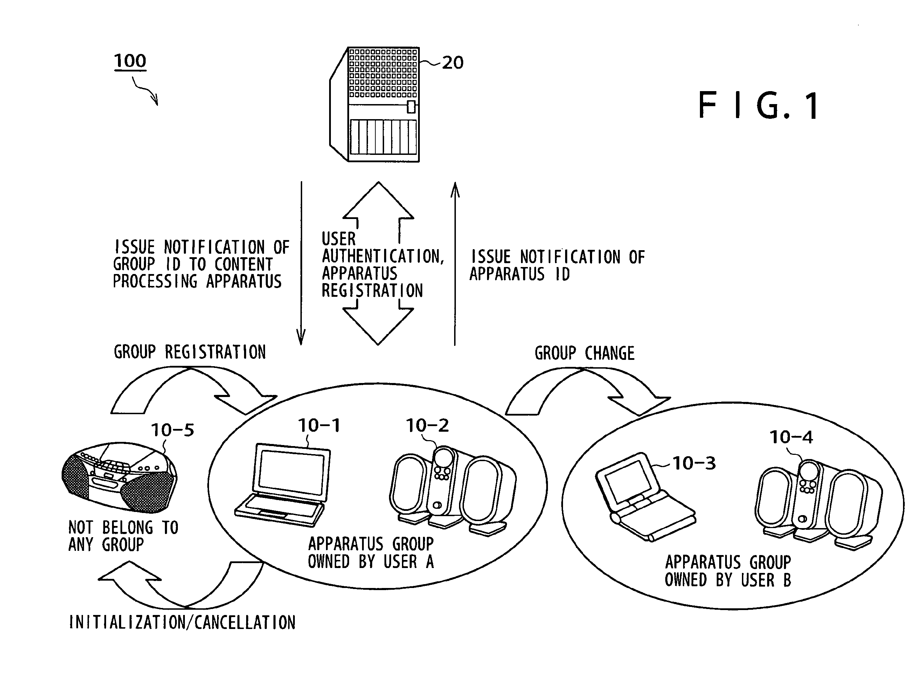

An outline of group registration by a content sharing system 100 in accordance with the present embodiment for carrying out such sharing and copyright management of content as described above is described with reference to FIG. 1.

The content sharing system 100 includes content processing apparatuses 10-1 to 10-4, which are grouped, for example, into an apparatus group (content processing apparatuses 10-1 and 10-2) owned by user A and another apparatus group (content processing apparatuses 10-3 and 10-4) owned by another user B. It is to be noted that, where there is no necessity to distinguish the content processing apparatuses 10-1 to 10-4, each of them is hereinafter referred to as content processing apparatus 10. The grouping process of the content processing apparatuses 10 is performed by placing, in terms of a unit of an owner-user, the content processing apparatuses 10 into a group registration located in, for example, a distribution and group management server 20 (hereinafter referred to sometimes as "server 20").

The group registration is described particularly. First, a user would use one of the content processing apparatuses 10 they own to access the server 20 to perform a user authentication process and transmit an apparatus ID (device ID) of the content processing apparatus 10 to the server 20. The distribution and group management server 20 stores the apparatus ID of the content processing apparatus 10 in a coordinated relationship with the user and places the content processing apparatus 10 into a group registration of an apparatus group of the user. Further, the distribution and group management server 20 transmits a group ID corresponding to the user, and the content processing apparatus 10 receives and stores the group ID into a storage device of the content processing apparatus 10. Any other content processing apparatus 10 is similarly registered into a pertaining group.

In such group registration as described above, one content processing apparatus 10 can be registered only into an apparatus group of a single user, but cannot be registered concurrently in apparatus groups of different users. In other words, each content processing apparatus 10 can have only one group ID. Accordingly, if the owner of, for example, the content processing apparatus 10-2 changes from user A to user B, then the group registration of the content processing apparatus 10-2 must be changed accordingly.

Further, for example, if user A newly purchases a content processing apparatus 10-5, since the content processing apparatus 10-5 does not belong to any group as yet, it can be placed into a group registration of user A's apparatus group. On the other hand, for example, the content processing apparatus 10-1 registered already in user A's apparatus group can be removed from the group registration so that it does not belong to any group.

In the content sharing system 100 in accordance with the present embodiment, content can be shared freely by and between a plurality of content processing apparatuses 10 that are placed in a registration of an apparatus group of the same user in such a manner as described above, and which therefore have the same group ID. On the other hand, content cannot be shared by and between a plurality of content processing apparatuses 10 that are placed in registrations of apparatus groups of different users and which have different group IDs.

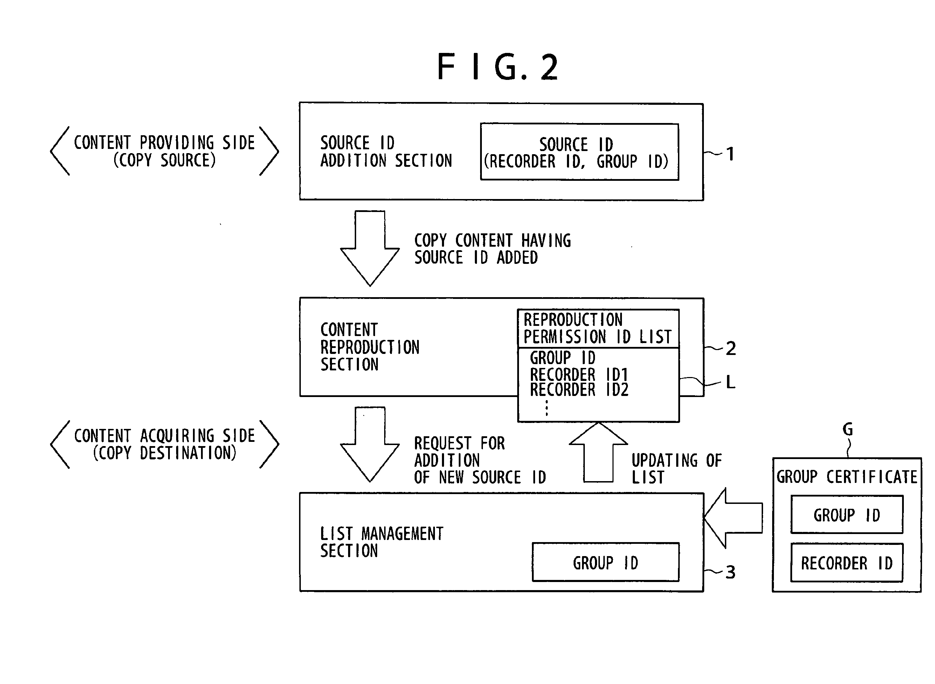

Now, an outline of a management method of such content sharing is described with reference to a block diagram of FIG. 2, which shows principal components of the content sharing system 100 in accordance with the present embodiment.

Referring to FIG. 2, the content sharing system 100 in accordance with the present embodiment includes a source ID addition section 1, a content reproduction section 2, and a list management section 3 as principal components.

The source ID addition section 1 is provided incidentally to a recording machine for content data, recording software, or the like, on the content providing side in a content processing apparatus 10 having a content recording function, or the server 20 having a content distribution function. The source ID addition section 1 has a unique source ID in terms of a unit of a providing source of content data, and it has a function of adding the source ID to content data upon production or distribution of such content data.

Here, the "providing source of content data" (hereinafter referred to simply as "content providing source") signifies an apparatus or a user that serves as a source on the personal user level of content data shared in the content sharing system 100. More particularly, the content providing source may be (1) a user who makes use of a content distribution service to acquire (purchase or the like) content, (2) a content processing apparatus 10 by which content is recorded by ripping, by original recording by the apparatus itself (self-recording), or the like, or (3) a like source. The source ID is an ID given uniquely to each such content providing source, and a content providing source can be specified depending upon such source ID.

In the present embodiment, a recorder ID and a group ID as described above are used as examples of such a source ID.

The recorder ID is an identifier applied uniquely in terms of a unit of a content processing apparatus 10 (recording apparatus) having a content data recording function. The recorder ID is applied, for example, by a content processing apparatus 10 on which content data is produced, to the production content data. The production content data is content data produced by ripping, self-recording, editing, and so forth, by the recording apparatus. Accordingly, the recording apparatus that is the source of production of the content data can be specified based on the recorder ID.

The group ID is an identifier applied uniquely in terms of a unit of a user who owns a content processing apparatus 10 as described above. More particularly, the group ID is applied in terms of a unit of a user account of a content sharing service provided by the content sharing system 100 in accordance with the present embodiment. Accordingly, the apparatus group to which the content processing apparatus 10 belongs and the owner of the content processing apparatus 10 can be identified based on the group ID.

Further, in the present embodiment, the group ID is used also as a user ID applied in terms of a unit of a user account of a content distribution service (for example, an electronic music distribution service). The group ID is applied, by the server 20, to distribution content data distributed from the server 20 to a content processing apparatus 10. Accordingly, also a user who acquires (for example, purchases) distribution content data from the server 20 can be specified based on the group ID.

Content data to which the source ID (recorder ID or group ID) is added by the source ID addition section 1 is copied from a content processing apparatus 10 on the content providing side to another content processing apparatus 10 on the content acquiring side. It is to be noted that upon copying of such content data, a copy limitation process based on the total number of copies is not used, as in a conventional copyright management system. Accordingly, content data can be copied freely between a plurality of content processing apparatuses 10.

The content reproduction (i.e., rendering for output) section 2 is a content data reproduction machine or reproduction software for a personal computer provided in a content processing apparatus on the side at which content are to be acquired and utilized. The content reproduction section 2 has a reproduction permission ID list L, which is a list of source IDs with regard to which reproduction of content data is permitted by the content reproduction section 2. Or in other words, list L is a list of source IDs representative of content sources that can be shared. The reproduction permission ID list L is provided for each unique content reproduction section 2, and different content reproduction sections 2 have different source IDs included in their reproduction permission ID lists L. While the reproduction permission ID list L can include a plurality of recorder IDs, it can include only one group ID.

When any of the content data to which the source ID is added is to be reproduced, the content reproduction section 2 checks the reproduction permission ID list L so as to enable/disable reproduction of the content data. In particular, if the source ID added to the content data is included in the reproduction permission ID list L, then the content reproduction section 2 can reproduce the content data. But if the source ID added to the content data is not included in the reproduction permission ID list L, then the content reproduction section 2 cannot reproduce the content data. In this manner, the content reproduction section 2 limits reproduction of content data in terms of a unit of a source ID--that is, in terms of a unit of a content providing source.

Further, the content reproduction section 2 can issue, for example to list management section 3, a request for permission for addition of a new source ID to the reproduction permission ID list L. In particular, in order for the content reproduction section 2 to reproduce content data to which is added a source ID that is not included in the reproduction permission ID list L thereof, it is necessary to add the new source ID to the reproduction permission ID list L. To this end, the content reproduction section 2 issues a request for permission for addition of the new source ID to the list management section 3, which permits updating of the reproduction permission ID list L.

The list management section 3 is provided on a content processing apparatus on the side at which content is acquired and utilized. The list management section 3 updates the reproduction permission ID list L provided in the content reproduction section 2. Here, the updating of the reproduction permission ID list L signifies addition, deletion, or change of a source ID to, from, or in the reproduction permission ID list L. The list management section 3 can add/delete a source ID to/from the reproduction permission ID list L to permit/reject reproduction of the content data to which the source ID is added in the content reproduction section 2.

The list management section 3 acquires a group certificate G, which shares information that coordinates a group ID and a recorder ID. List management section 3 updates the reproduction permission ID list L based on the group certificate G. More particularly, if the group ID included in the group certificate G is same as one of the group IDs included in the reproduction permission ID list L, then the list management section 3 adds the recorder ID included in the group certificate G to the reproduction permission ID list L. Consequently, the recorder ID of the content processing apparatus 10 (recording apparatus) that is registered in the registration of the apparatus group of the same user can be included into the reproduction permission ID list L so as to allow the content data to be reproduced from the recording apparatus.

As described above, the content sharing system 100 in accordance with the present embodiment controls reproduction of content data by means of the source ID addition section 1, content reproduction section 2, and list management section 3 to perform sharing management (copyright management) of content copied between the different content processing apparatuses 10.

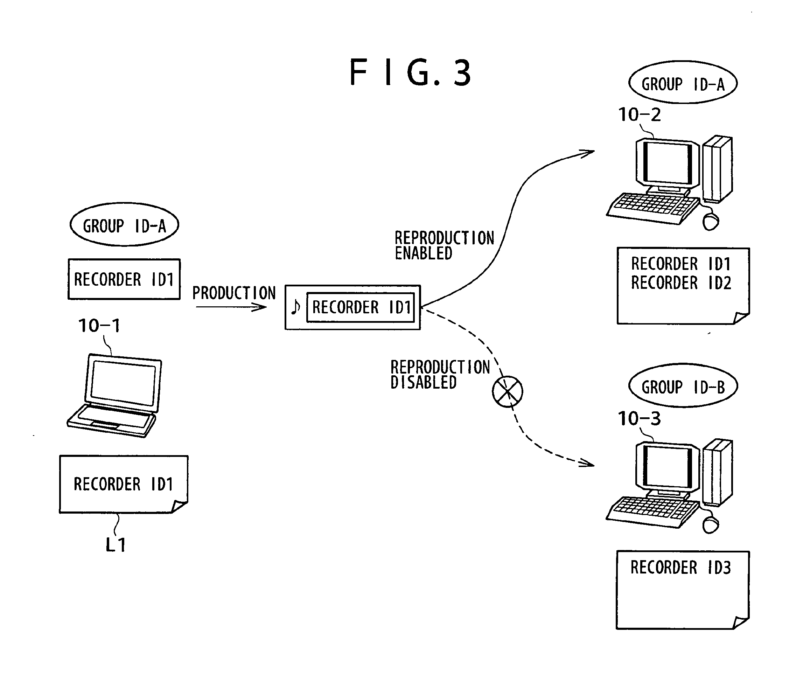

A particular example wherein such a content sharing system 100, which includes the source ID addition section 1, content reproduction section 2, and list management section 3, as described above, shares content data is described with reference to FIG. 3.

The content processing apparatus 10-1 and the content processing apparatus 10-2 are owned by the user A and have the same user ID-A as a result of such group registration as described above. Meanwhile, the content processing apparatus 10-3 is owned by user B and has another user ID-B as a result of such group registration as described above.

In such a group registration condition as described above, the content processing apparatus 10-2 can add, to the reproduction permission ID list L2 of the content processing apparatus 10-2, a recorder ID1 of the content processing apparatus 10-1, which belongs to the same apparatus group. On the other hand, the content processing apparatus 10-3 cannot add, to the reproduction permission ID list L3 of the content processing apparatus 10-3, the recorder ID1 of the content processing apparatus 10-1, which belongs to a different apparatus group.

If the content processing apparatus 10-1 produces reproduction content data C1 by ripping or the like, then it adds its own recorder ID1 to the reproduction content data C1. If it is tried to share the reproduction content data C1, to which the recorder ID1 is added, among the content processing apparatuses 10-1 to 10-3, then since the recorder ID1 is included in the reproduction permission ID list L2 of the content processing apparatus 10-2, the content processing apparatus 10-2 can reproduce the reproduction content data C1. Since the recorder ID1 is not included in the reproduction permission ID list L3 of the content processing apparatus 10-3, however, the content processing apparatus 10-3 cannot reproduce the reproduction content data C1.

In this manner, if the recorder ID is included in the reproduction permission ID list L, then the reproduction content data C1 to which the recorder ID is added can be copied and reproduced. In other words, sharing of the reproduction content data C1 among the content processing apparatuses 10-1 to 10-3 is controlled in terms of a unit of a recording apparatus (in terms of a unit of a recorder ID). Accordingly, if a user places a plurality of content processing apparatuses 10 owned thereby into a group registration and adds a recorder ID to the reproduction permission ID list L of the content processing apparatuses 10 (places sharing of the apparatus into group registrations of the content processing apparatuses 10), then content data can be shared freely between the content processing apparatuses 10.

An outline of the content sharing system 100 in accordance with the present embodiment is described above. In the following, the content sharing system 100 in accordance with the present embodiment and a particular configuration of components of the system are described in detail.

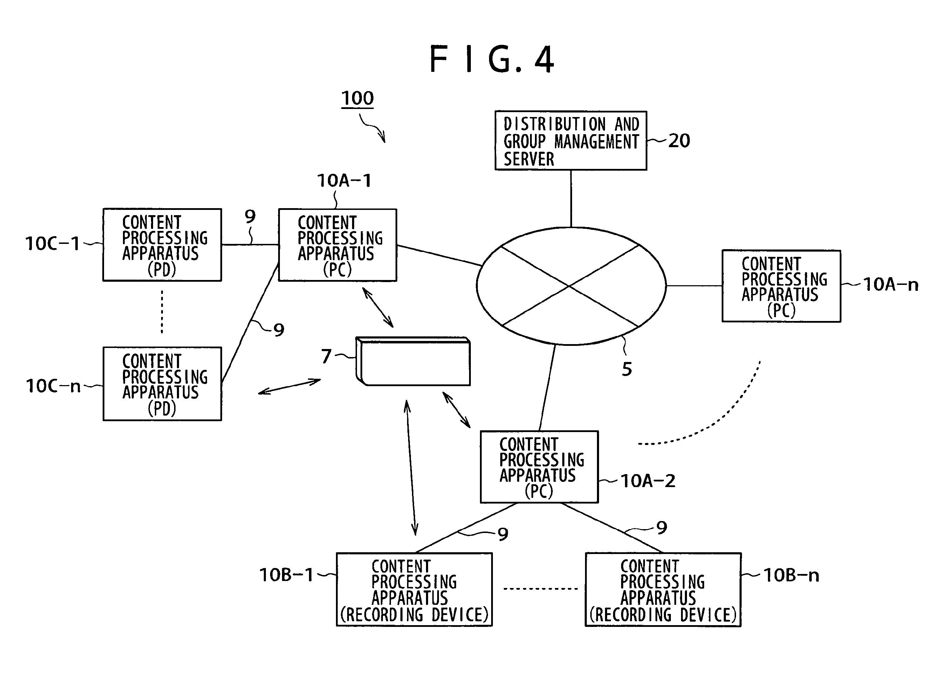

First, a general configuration of the content sharing system 100 in accordance with the present embodiment is described with reference to a block diagram of FIG. 4.

The content sharing system 100 in accordance with the present embodiment includes a plurality of content processing apparatuses 10A-1, 10A-2, ..., 10A-n and 10B-1, ..., 10B-n and 10C-1, ..., 10C-n (which may be hereinafter referred to generally as "content processing apparatuses 10"), a distribution and group management server 20, a network 5, local lines 9 for interconnecting the content processing apparatuses 10 and the distribution and group management server 20, and a recording medium 7.

Each of the content processing apparatuses 10 is formed as a content reproduction apparatus and/or content recording apparatus. The content processing apparatuses 10 may be any of various recording and reproduction apparatuses, recording apparatus for recording only, or reproduction apparatus for reproduction only, which can record/reproduce content data of images, sound and so forth on or from a storage apparatus built therein, or on or from the recording medium 7. More particularly, the content processing apparatuses 10 may be any of, for example, computer apparatuses such as personal computers (notebook type, desk top type and so forth), PDAs (Personal Digital Assistants), portable video players/recorders, MP3 players, portable audio players/recorders such as IC players/recorders, image pickup apparatuses such as digital cameras and video recorders, game machines for home use, VTRs, CD, MD, or DVD recorders/players, radio apparatus, portable telephone sets, PHS terminals, information appliances, and so forth.

The content processing apparatuses 10 are classified into content processing apparatuses 10A configured as recording and reproduction apparatus into which software, for example, for a content sharing service can be installed, content processing apparatuses 10B configured as recording and reproduction apparatus into which software for such a content sharing service as mentioned above cannot be installed (a reproduction function is not necessarily required), and content processing apparatuses 10C configured as apparatus for reproduction only. In particular, a computer apparatus such as a personal computer may be used for the content processing apparatus 10A and a recording device such as a DVD recorder may be used for the content processing apparatus 10B while, for example, a portable device (PD) for reproduction only may be used for the content processing apparatus 10C. It is to be noted that the content processing apparatuses 10B and 10C can be connected to the content processing apparatuses 10A through a local line 9. The local line 9 may be configured from a wire cable such as a USB (Universal Serial Bus) cable or a SCSI (Small Computer System Interface) cable, or may otherwise be connected by a wireless connection.

From among the content processing apparatuses 10, the content processing apparatuses 10A and 10B, which have a recording function, can produce and record new content data, for example, by recording by itself (recording of sound or/and images by the content processing apparatus 10 itself), by ripping, or the like. It is to be noted that recording by itself signifies to record sound/images collected/picked up by means of a sound collecting apparatus or an image pickup apparatus of the content processing apparatus 10 itself or sound/images received by a communication apparatus as sound data/image data. Ripping signifies to extract digital content data (sound data, image data, and so forth) recorded on a recording medium such as a music CD, a video DVD, a CD-ROM for software or the like, to convert the content data into data of a file format that can be processed by a computer apparatus, and to record the data of the file format.

Further, the content processing apparatuses 10A can record distribution content data distributed from the distribution and group management server 20 on recording means, such as the storage apparatus or the recording medium 7.

Further, each content processing apparatus 10 can transmit and receive production content data or distribution content data described above to and from another one of the content processing apparatuses 10 via the network 5 or/and a local line 9, or can exchange such content data via the recording medium 7. Consequently, the content data can be provided/acquired by and shared between a plurality of content processing apparatuses 10.

Further, the content processing apparatus 10 can reproduce production content data produced thereby or distribution content data distributed thereto in such a manner as described above. Furthermore, the content processing apparatus 10 can reproduce production content data or distribution content data acquired from another content processing apparatus 10 if the content data is permitted for reproduction.

It is to be noted that the content processing apparatus 10 in accordance with the present embodiment includes components that correspond to, for example, a source ID addition section 1, a content reproduction section 2, and a list management section 3 as described above, and has a copyright management function of content data as hereinafter described in detail.

The distribution and group management server 20 is formed as a group management server in accordance with the present embodiment and is configured also as a distribution server used for content distribution services such as electronic music distribution (EMD). The distribution and group management server 20 is configured from a computer apparatus having a server function.

The distribution and group management server 20 can perform, as a function of the group management server, authentication of a user and placement of a content processing apparatus 10 into a group registration in terms of a unit of a user who owns the content processing apparatus 10. Further, the distribution and group management server 20 can, as a function of the distribution server, distribute content data via network 5 to content processing apparatuses 10 owned by a user of a content distribution service. In this instance, when the distribution and group management server 20 distributes music content, it can compress the content data, for example, in accordance with the MP3 (MPEG Audio Layer-3) method or the like, and distribute the music content as such. It is to be noted that, as hereinafter described in detail, the distribution and group management server 20 in the present embodiment includes a component which corresponds to, for example, the source ID addition section 1 as described above.

While the distribution and group management server 20 in the present embodiment is configured such that a group management server and a distribution server are integrated with each other as described above, the configuration of the distribution and group management server 20 is not limited to the specific example. A group management server and a distribution server may be provided otherwise as separate serverapparatuses from each other.

The network 5 is a communication network for interconnecting the plural content processing apparatuses 10 and the distribution and group management server 20 for bidirectional communication. The network 5 may be formed from a public network such as the Internet, a telephone network, or a satellite communication network, or a leased network such as a WAN, a LAN, or an IP-VPN, and may be any of wired and wireless networks.

Further, the network 5 includes a private network. The private network is a network that interconnects a plurality of content processing apparatuses 10 that share content data within the range of private use from the point of view of copyright management. The private network of the type described may particularly be, for example, a network that interconnects a plurality of content processing apparatuses 10 used by the same user, a home network that interconnects a plurality of content processing apparatus 10 used in the same home, or a LAN that interconnects a plurality of content processing apparatuses 10 used in a group of a limited scale (in a company, by friends, or the like).

The recording medium 7 is a removable medium onto which various data such as content data and a group certificate G can be stored, and may be any of various optical disks 3 such as a DVD-R, a DVD-RW, a DVD-RAM, a CD-R, a CD-RW, and a magneto-optical disk, magnetic disks such as a flexible disk and a hard disk, and various semiconductor memories. It is to be noted that the recording medium 7 may be a recording medium with a copyright management function for limiting copy or reproduction of content data, for example, using an encryption key.

The recording medium 7 functions as a providing/acquiring medium of content data between a plurality of content processing apparatus 10. For example, by loading a recording medium 7 on which content data is written by the content processing apparatus 10-1 into the content processing apparatus 10-2 to read out the content data, the content data can be provided from the content processing apparatus 10-1 to the content processing apparatus 10-2. Further, the content processing apparatus 10-1 can provide/acquire content data to/from a content processing apparatus 10C, which cannot be connected to the network 5, via the recording medium 7. Further, the recording medium 7 functions also as a providing/acquiring medium of a group certificate G between the distribution and group management server 20 and a plurality of content processing apparatuses 10.

The content sharing system 100 having such a configuration as described above can share the same content data by providing and acquiring (that is, copying) the content data between a plurality of content processing apparatuses 10. Further, the content sharing system 100 permits/rejects reproduction of content data shared by the content processing apparatuses 10 in terms of a unit of a source ID by means of the source ID addition section 1, content reproduction section 2, and list management section 3, as described above. This allows the content sharing system 100 to execute copyright management efficiently, and to copy and reproduce content comparatively freely within the range of private use.

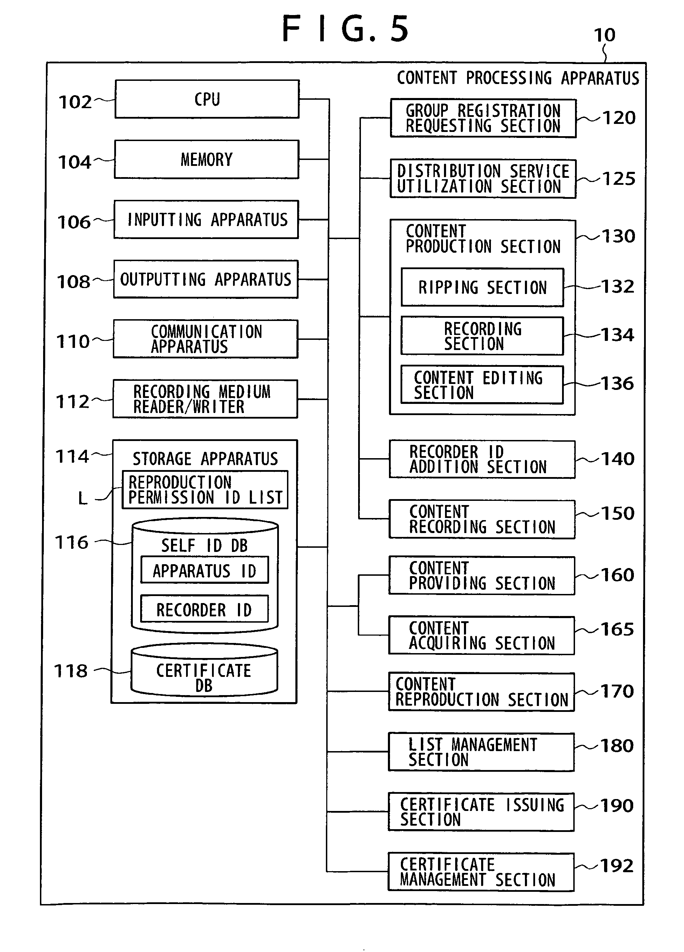

Now, a configuration of the content processing apparatus 10 in accordance with the present embodiment is described with reference to a block diagram of FIG. 5. It is to be noted that a configuration of a content processing apparatuses 10A formed from a PC or the like as described above is shown as a representative one of the content processing apparatus 10.

The content processing apparatus 10 includes a CPU 102, a memory 104, an inputting apparatus 106, an outputting apparatus 108, a communication apparatus 110, a recording medium reader/writer 112, a storage apparatus 114, a group registration requesting section 120, a distribution service utilization section 125, a content production section 130, a recorder ID addition section 140, a content recording section 150, a content providing section 160, a content acquiring section 165, a content reproduction section 170, a list management section 180, a certificate issuing section 190, and a certificate management section 192.

The CPU 102 functions as a calculation processing apparatus and a control apparatus, and it can control processes of the components in the content processing apparatus 10. The memory 104 is formed from, for example, a RAM, a ROM, or a cache memory, and it has a function of temporarily storing various data relating to processing of the CPU 102, operation programs for the CPU 102, and so forth.

The inputting apparatus 106 includes operation means such as a mouse, a keyboard, a touch panel, buttons, switches, and levers, an input control circuit for producing and outputting an input signal to the CPU 102, and so forth. The user of the content processing apparatus 10 can operate the inputting apparatus 106 to input various data and to provide instructions for processing operations to the content processing apparatus 10.

The outputting apparatus 108 includes a display apparatus such as a CRT display unit or a liquid crystal display (LCD) panel, a sound outputting apparatus such as a speaker, and so forth. The outputting apparatus 108 can output content data reproduced by the content reproduction section 170 hereinafter described. More particularly, the display apparatus displays reproduced image data, electronic book, game, GUI screen of various software, or the like. Meanwhile the sound outputting apparatus can output reproduced sound data. It is to be noted that, where the content processing apparatus 10 is colnfigured as a machine for exclusive use to record content, the outputting apparatus 108 need not necessarily be provided. Further, where the content data to be handled by the content processing apparatus 10 includes only sound data, the display apparatus is unnecessary, and where the content data includes only image data, the sound outputting apparatus is unnecessary.

The communication apparatus 110 is a communication interface formed from, for example, a communication line, a communication circuit, or a communication device. The communication apparatus 110 can transmit and receive, via network 5 of a local line 9, various data such as content data, a reproduction permission ID list L, a group certificate G, and control signals to and from an external apparatus such as another content processing apparatus 10 or the distribution and group management server 20.

The recording medium reader/writer 112 is an apparatus that records/reproduces on/from the recording medium 7 various data such as content data, a reproduction permission ID list, and a group certificate G. The recording medium reader/writer 112 is formed, for example, from a disk apparatus such as an optical disk drive where the recording medium 7 is an optical disk or the like, and from a reader/writer for a semiconductor memory where the recording medium 7 is a semiconductor memory. It is to be noted that the recording medium reader/writer 112 may be built in the content processing apparatus 10 or may be external to the content processing apparatus 10.

The storage apparatus 114 is an apparatus that can store various data such as programs and content data, and is formed from, for example, a hard disk drive or a flash memory.

Further, the storage apparatus 114 is configured as storage means in accordance with the present embodiment and has stored therein a group ID (first group ID) of which the content data has been notified from the distribution and group management server 20. Further, the storage apparatus 114 has stored therein a reproduction permission ID list L corresponding, for example, to the content reproduction section 170 of the content reproduction apparatus 10 itself. The reproduction permission ID list L is stored in an encrypted state or in a state wherein it has a signature added thereto in order to prevent, for example, falsification by a user.

In the present embodiment, a group ID, about which the content processing apparatus 10 has been notified from the server 20, is stored such that it is included in the reproduction permission ID list L. This is intended to utilize the group ID as a source ID for distribution content data so that reproduction control of distribution content data is performed based on the group ID. It is to be noted that the group ID need not necessarily be stored in the reproduction permission ID list L, but may be disposed in another storage area in the storage apparatus 114, such as a self ID database 116, or else in the memory 104, or the recording medium 7. Also the reproduction permission ID list L may not necessarily be stored in the storage apparatus 114. but may be stored, for example, in the memory 104 or the recording medium 7.

The self ID database 116 is stored in the storage apparatus 114 and includes, for example, an apparatus ID, which corresponds to the content processing apparatus 10 itself, and a recorder ID. The apparatus ID (device ID) is an identifier applied uniquely in terms of a unit of a content processing apparatus 10 to all content processing apparatuses 10 that have at least a content recording or reproduction function such that each of the content processing apparatuses 10 can be identified uniquely with the apparatus ID. The apparatus ID may be, for example, a terminal ID or a media ID. The terminal ID is an apparatus ID applied uniquely to the content processing apparatus 10A each configured from an information processing apparatus such as a PC. The media ID is an ID applied uniquely to a storage medium provided in the content processing apparatus 10B and 10C each configured from a sound recording device, a PD, or the like.

The recorder ID is an ID applied uniquely to the content processing apparatuses 10 having a sound recording function as described above, but is not applied to the content processing apparatuses 10 for reproduction only. Accordingly, the self ID database 116 of the content processing apparatus 10 for reproduction only does not have a recorder ID stored therein.

Such apparatus ID and recorder ID as described above are stored safely in an encrypted form into the self ID database 116 upon shipment of the content processing apparatus 10 from a factory. Therefore, the user who owns the content processing apparatus 10 cannot falsify the apparatus ID and the recorder ID.

Further, a certificate database 118 is stored in the storage apparatus 114. The certificate database 118 stores a group certificate G issued from the certificate issuing section 190 hereinafter described or a group certificate G acquired from another content processing apparatus 10 or the server 20. The certificate database 118 may further store the date and hour of issuance, the date and hour of acquisition, or the like, of the group certificate G.

The group registration requesting section 120 performs a group registration requesting process of the content processing apparatus 10 to the server 20. In the group registration requesting process, the group registration requesting section 120 transmits group registration requesting information (for example, a group registration requesting notification, a user ID, a credit card number, the apparatus ID) to the server 20. The group registration requesting section 120 receives the group ID transmitted from the server 20 in response to the group registration of the content processing apparatus 10. Further, the group registration requesting section 120 outputs, for example, the received group ID and group registration notification to the list management section 180.

Further, the group registration requesting section 120 can perform a group registration cancellation requesting process of the content processing apparatus 10 to the server 20. Also in this instance, similarly as upon registration, the group registration requesting section 120 transmits group registration cancellation requesting information (for example, a group registration cancellation requesting notification, a user ID, a credit card number, the apparatus ID) to the server 20. If such registration cancellation is performed, then the group registration requesting section 120 notifies the list management section 180 of the registration cancellation.

The distribution service utilization section 125 receives, via network 5 and communication apparatus 110, distribution content data distributed from the distribution and group management server 20. In particular, if the user of the content processing apparatus 10 makes use of a content distribution service to purchase content data, then the distribution service utilization section 125 downloads the distribution content data from the distribution and group management server 20. The distribution content data received in this manner has a group ID that has been added thereto by the distribution and group management server 20 and that corresponds to the content processing apparatus 10 itself. The distribution service utilization section 125 records the received distribution content data, for example, in the storage apparatus 114 or the recording medium 7.

Further, the distribution service utilization section 125 can transmit and receive various kinds of information such as user authentication information (a user ID, a password, and so forth) necessary for the user to utilize the content distribution service, charging information, and content distribution request information to and from the distribution and group management server 20, and it can support inputting and outputting of such information. The distribution service utilization section 125 is formed, for example, by installing content distribution service software corresponding to a content distribution service to be utilized into the content processing apparatus 10. It is to be noted that a distribution service utilization section 125 may be provided for each of a plurality of content distribution services to be utilized by the user.

The content production section 130 can produce new content data. The content production section 130 includes, for example, a ripping section 132, a recording section 134, and a content editing section 136.

The ripping section 132 can rip data recorded on a recording medium, such as a music CD or a DVD for an image. More particularly, the ripping section 132 controls the recording medium reader/writer 112, for example, based on user inputs, to extract a file of music/image data from the recording medium and convert the file into another file of a file format with which the music/image data can be processed by the content processing apparatus 10 to produce content data. The object of the ripping may be any of a CD and self recording. The ripping section 132 can be formed, for example, by installing software for ripping into the content processing apparatus 10.

The recording section 134 can produce new content data by recording sound or images. The self recording section 134 is formed from, for example, a sound collecting apparatus such as a microphone and an image pickup apparatus such as a camera, a sound/image recording apparatus, and a recording control section for controlling the apparatus mentioned. The recording section 134 thus collects sound around the content processing apparatus 10 and picks up an image of an image pickup subject, for example, based on user inputs to produce sound data or image data and so forth, and performs predetermined data processing for the data to produce new content data. Further, the recording section 134 can convert the format of image/sound data of a television program or a radio program received through the communication apparatus 110 or the like into a recordable format to produce new content data.

The content editing section 136 can edit (work, synthesize, connect, and so forth) one or more content data to produce new content data unique to the user. Further, the content editing section 136 can perform a plotting process, for example, based on user inputs, to produce new image data, perform a composing process to produce new sound data, perform a document production process to produce new electronic book data, and produce new software formed from a program list. The content editing section 136 can be formed, for example, by installing software for content editing/production into the content processing apparatus 10.

Content data (production content data) produced by the content production section 130 is output to the recorder ID addition section 140.

The recorder ID addition section 140 is a component corresponding to the source ID addition section 1 described above with reference to FIG. 2. The recorder ID addition section 140 adds a recorder ID, for example, to production content data produced by the content production section 130. In particular, the recorder ID addition section 140 reads out a recorder ID stored in a self ID database of the storage apparatus 114 and adds the read out recorder ID to the production content data.

The time of the addition of a recorder ID is when, for example, production of content data by the content production section 130 is completed. By immediately adding a source ID to content data in this manner, where the content data requires copyright management, the source ID can be embedded into the content data with certainty before the content data circulates in the system. It is to be noted that the time of addition of a source ID is not limited to the example just described, but may be, for example, a time at which the reproduction content data is reproduced for the first time, another time at which the reproduction content data is copied, or a further time at which the produced production content data is provided to another content processing apparatus 10.

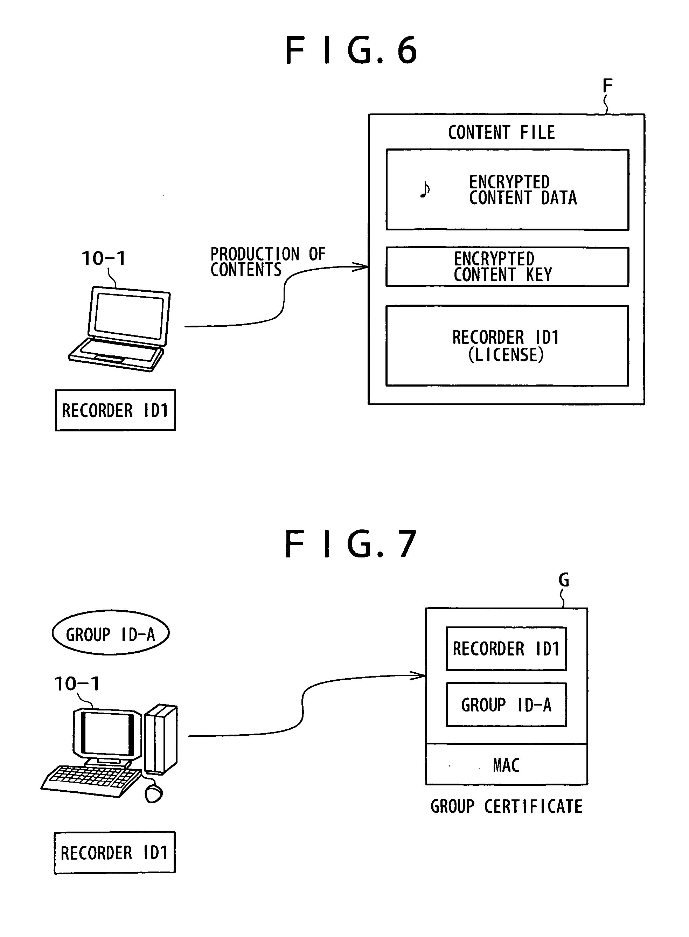

Here, a method of adding a recorder ID by the recorder ID addition section 140 is described with reference to FIG. 6. The recorder ID addition section 140 of the content processing apparatus 10-1 to which the recorder ID1 is applied can utilize, for example, an encryption technique to produce a content file F of production content data to which the recorder ID1 is added.

The content file F includes an encrypted content key encrypted with a system common key that can be handled only by the content sharing system 100, content data encrypted with the encrypted content key, and a license including the recorder ID1. The license is encrypted so that any falsification can be detected. Through the content file F produced in this manner, the recorder ID addition section 140 can embed the recorder ID safely into the content data. Meanwhile, the content processing apparatus 10 retains common secret information so that decoding of an encrypted content key and falsification checking of the license can be performed. Therefore, even if content data to which a recorder ID is added is shared in the content sharing system 100, the recorder ID added to the content data can be favorably prevented from being falsified.

As another source ID adding method, the recorder ID addition section 140 may utilize, for example, a digital watermark technique to add a source ID to content data. In particular, the recorder ID addition section 140 applies distortion to video or audio content data such that the source ID can be extracted from the content data only by means of a digital watermark detector. Thus, even if content data is transferred as analog data between a plurality of content processing apparatuses 10, the source ID can be maintained in the content data. Therefore, the copyright management of content can be strictly executed further.

The recorder ID addition section 140 outputs the content data having the recorder ID, corresponding to itself, added thereto to the content recording section 150.

The recorder ID addition section 140 is such as described above. It is to be noted that, in the present embodiment, all content processing apparatuses 10 having a content data recording function include a recorder ID addition section 140 such that each of the content processing apparatuses 10 adds to production content data a recorder ID individually corresponding to it. However, execution of the addition of a recorder ID is not limited to the example just described, but, for example, a server apparatus such as a home network server may be provided in a private network, in which a plurality of content processing apparatuses 10 are connected, such that the server apparatus representatively executes a recorder ID adding process of all of the content processing apparatuses 10 in the private network.

The content recording section 150 can control, for example, the storage apparatus 114 or the recording medium reader/writer 112 so as to record on the storage apparatus 114 or the recording medium 7 reproduction content data, to which a recorder ID is added by the recorder ID addition section 140. Further, the content recording section 150 can similarly record distribution content data received, for example, by the distribution service utilization section 125 or content data acquired from the outside by the content acquiring section 165.

The content providing section 160 can provide content data having a source ID added thereto (for example, production content data having a recorder ID added thereto, or distribution content data having a group ID added thereto) to an external content processing apparatus 10. Further, the content acquiring section 165 can acquire content data with a source ID added thereto from an external content processing apparatus 10. The content providing section 160 and the content acquiring section 165 may execute providing/acquiring processes of such content data, for example, by transmission/reception processes via the network 5 or a local line 9, or else via the recording medium 7.

When the content data is to be provided/acquired via the network 5, the content providing section 160 functions as a content transmission control section for controlling the communication apparatus 110 so as to transmit the content data via the network 5 or the local line 9, while the content acquiring section 165 functions as a content reception control section for controlling the communication apparatus 110 so as to receive the content data via the network 5 or the local line 9.

On the other hand, when the content data is to be provided/acquired via the recording medium 7, the content providing section 160 functions as a content write control section that controls the recording medium reader/writer 112 so as to write the content data on the recording medium, and the content acquiring section 165 functions as a content read control section that controls the recording medium reader/writer 112 so as to read out the content data from the recording medium.

The content reproduction section 170 is a component that corresponds to the content reproduction section 2 described above with reference to FIG. 2. The content reproduction section 170 is formed from, for example, a reproduction apparatus having a content reproduction function or software for content reproduction installed in the content processing apparatus 10, and it can reproduce various kinds of content data. The content data reproduced by the content reproduction section 170 is output from the outputting apparatus 108.

The content reproduction section 170 has a reproduction permission ID list L corresponding thereto, for example, in the storage apparatus 114. When content data to which the source ID is added is to be reproduced, the content reproduction section 170 controls reproduction of content data depending upon whether or not the source ID is included in the reproduction permission ID list L. Details of the content reproduction section 170 are hereinafter described.

It is to be noted that two or more content reproduction sections 170 may be provided in one content processing apparatus 10. For example, two or more different pieces of software for content reproduction are installed into one content processing apparatus 10, or two or more reproduction apparatuses are provided, or else software for content reproduction and a content reproduction section are used to form two or more content reproduction sections 170 in one content processing apparatus 10.

In this instance, the reproduction permission ID list L may be provided in a corresponding relationship to each of the plural content reproduction sections 170. Thus, each of the two or more content reproduction sections 170 can control reproduction of content data to which a source ID is added in accordance with the reproduction permission ID list L included in the content reproduction section 170. Alternatively, only one content processing apparatus 10 may include only one reproduction permission ID list L such that the one content processing apparatus 10 is shared by a plurality of content reproduction sections 170. Thus, in the same content processing apparatus 10, content data to which a source ID is added can control reproduction in a concentrated manner irrespective of the content reproduction section 170 that performs a reproduction process.

The list management section 180 is a component corresponding to the list management section 3 described above with reference to FIG. 2. The list management section 180 has a function of updating the reproduction permission ID list L stored, for example, in the storage apparatus 114. It is to be noted that details of the list management section 180 are hereinafter described.

The certificate issuing section 190 has a function of issuing a group certificate G for certifying an apparatus group to which the content processing apparatus 10 itself belongs. The certificate issuing section 190 may be formed from software for certificate issuance installed in the content processing apparatus 10. The certificate issuing section 190 is provided in the content processing apparatus 10A, such as a PC having a content recording function, but may not be provided in the content processing apparatus 10B and 10C, such as a sound recording device or a PD.

The certificate issuing section 190 issues a group certificate G as seen in FIG. 7 while the content processing apparatus 10-1 is placed in a group registration and has the group ID-A as described above. The group certificate G includes the group ID-A, corresponding to the user of the content processing apparatus 10-1, and the recorder ID1, corresponding to the content processing apparatus 10-1. Thus, it is certified by the group certificate G that the content processing apparatus 10-1 corresponding to the recorder ID1 belongs to an apparatus group owned by the user specified with the group ID-A. To the group certificate G, a digital signature for falsification detection such as a MAC (Message Authentication Code) is added. This can prevent falsification of the group certificate G.

In order to issue such a group certificate G as described above, the certificate issuing section 190 reads out the recorder ID and the group ID corresponding to the content processing apparatus 10 itself, adds an electronic signature to the recorder ID and group ID thus read out, and then performs an encryption process for the resulting recorder ID and group ID to produce and issue a group certificate G.

The certificate issuing section 190 can issue a group ID at any time after the content processing apparatus 10 is registered into a group registration. The certificate issuing section 190 can issue a group certificate G corresponding to the content processing apparatus 10 itself in response to user inputs of the content processing apparatus 10 or in response to a certificate issuing request from a certificate issuance requesting section 181 (hereinafter described) of the list management section 180 of another content processing apparatus 10. Further, the content processing apparatus 10 issues and transmits a group certificate G to the distribution and group management server 20 after it is registered into a group registration-in other words, immediately after a group ID is received from the distribution and group management server 20. Consequently, the distribution and group management server 20 can acquire the recorder ID of the content processing apparatus 10.

The certificate issuing section 190 may representatively issue a group certificate G of another one of the content processing apparatuses 10B (recording devices) connected by the network 5 or a local line 9. Further, where a plurality of content processing apparatuses 10 are connected by a private network, only that one of the content processing apparatuses 10 which is formed as a server apparatus may include the certificate issuing section 190 so that it can issue a group certificate G.

Further, the certificate issuing section 190 may add a term of validity to a group certificate G to be issued. In this instance, a content processing apparatus 10 that acquires the group certificate G can add the recorder ID included in the group certificate G to the reproduction permission ID list L only within the term of validity represented by the validity term information included in the group certificate G. Therefore, the content processing apparatus 10 can be controlled so as to reproduce the content data only within the term of validity set in the group certificate G.

Furthermore, the certificate issuing section 190 can distribute or provide a group certificate G issued in such a manner as described above to another content processing apparatus 10 or to the distribution and group management server 20. Although the route of the distribution of a group certificate G in this instance can be set arbitrarily, when the group certificate G is to be distributed to another content processing apparatus 10, it may be distributed once through the distribution and group management server 20. In this instance, group certificates G issued in the content sharing system 100 can be managed in a concentrated manner by the distribution and group management server 20. Accordingly, even if the content processing apparatuses 10 are not connected to each other, any content processing apparatus 10 can acquire a group certificate G and besides can acquire the latest group certificate G always from the distribution and group management server 20.

Also, the method of distribution of a group certificate G can be set arbitrarily. Typically, a group certificate G may be transmitted directly via the network 5 or a local line 9, or may be annexed to and transmitted together with an electronic mail, or otherwise may be pasted on a home page. Further, a group certificate G may be provided to a content processing apparatus 10 via a recording medium 7 on which the group certificate G is stored. Furthermore, a group certificate G may be distributed via a recording medium 7 on which the group certificate G is stored together with content data or may be added to or embedded in content data and transmitted or distributed via a recording medium 7. In this instance, for example, production content data can be distributed simultaneously with the recorder ID added to the production content data and with the group ID of the apparatus on which the reproduction content data is produced. Consequently, if the content processing apparatus 10 on the acquiring side belongs to the same group, it can reproduce the content data immediately.

The group certificate G distributed in this manner is utilized for sharing registration, that is, for addition of the recorder ID to the reproduction permission ID list L by another content processing apparatus 10. Consequently, any content processing apparatus 10 that receives the group certificate G from a content processing apparatus 10 that belongs to same apparatus group can acquire the recorder ID, which guarantees that the content processing apparatus 10 owns the same group ID. That is, the content processing apparatus 10 belongs to the same apparatus group and adds the recorder ID to the reproduction permission ID list L.

In this manner, in the present embodiment, since a group certificate G that coordinates a group ID and a recorder ID with each other is issued, even if different content processing apparatus 10 are not connected directly to each other, if they belong to the same apparatus group, then they can share their recorder IDs between each other.

The certificate management section 192 stores and manages a group certificate G issued by the certificate issuing section 190 and any group certificate G acquired from any other content processing apparatus 10 or the distribution and group management server 20 into and in the certificate database 118. Where the group certificates G are stored in this manner, the certificate issuing section 190 can read out a past group certificate G from the certificate database 118 and distribute it to another content processing apparatus 10 or the like. Further, if the content processing apparatus 10 is placed out of the pertaining group registration, then the certificate management section 192 deletes from the certificate database 118 all group certificates G relating to the group ID of the apparatus group of the cancelled group registration.

The content processing apparatus 10 includes such components as described above. It is to be noted that, depending upon the type of the content processing apparatus 10, the content processing apparatus 10 may not necessarily include all of the components described above. For example, the content processing apparatus 10B, such as a sound recording device, may not include, for example, the group registration requesting section 120, distribution service utilization section 125, and certificate issuing section 190. On the other hand, the content processing apparatus 10C, such as a PD, need not necessarily include, for example, the group registration requesting section 120, distribution service utilization section 125, content production section 130, recorder ID addition section 140, content recording section 150, and certification issuing section 190.

Further, the group registration requesting section 120, distribution service utilization section 125, content production section 130, recorder ID addition section 140, content recording section 150, content providing section 160, content acquiring section 165, content reproduction section 170, list management section 180, certificate issuing section 190, and certificate management section 192 may be formed as hardware having the functions described above or may otherwise be formed as software having the functions described above and installed in the content processing apparatus 10.

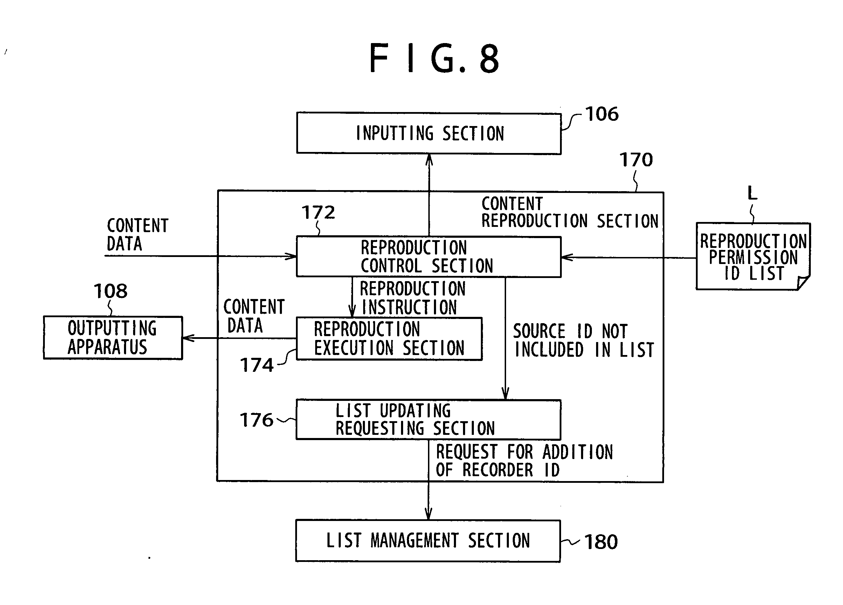

Now, the content reproduction section 170 in the present embodiment is described in detail with reference to FIG. 8.

As seen from FIG. 8, the content reproduction section 170 shown includes a reproduction control section 172, a reproduction execution section 174, and a list updating requesting section 176.

The reproduction control section 172 controls reproduction of content data of an object of a request for reproduction, based on a source ID (recorder ID or group ID) added to the content data and the reproduction permission ID list L.

More particularly, typically if a request for reproduction of content data designated by the user is accepted, then the reproduction control section 172 reads out from the storage apparatus 114 or the recording medium 7 the content data of an object of the request for reproduction and determines whether or not a source ID is added to the content data. If no source ID is added to the content data, then the reproduction control section 172 determines that no copyright management is required for the content data, permits reproduction of the content data, and outputs a reproduction instruction signal for the content data to the reproduction execution section 174. On the other hand, if a source ID (recorder ID or group ID) is added to the content data, then the reproduction control section 172 determines that the content data requires copyright management and performs the following processing.

First, the reproduction control section 172 reads out or extracts a source ID from the content data and then reads out and interprets the reproduction permission ID list L, typically from the storage apparatus 114. Then, the reproduction control section 172 compares the source ID read out from the content data and the source IDs included in the reproduction permission ID list L to determine whether or not the source ID read out from the content data is included in the reproduction permission ID list L. If a result of the comparison indicates that the source ID read out from the content data is included in the reproduction permission ID list L, then the reproduction control section 172 permits reproduction of the content data and outputs a reproduction instruction signal for the content data to the reproduction execution section 174. On the other hand, if the source ID read out from the content data is not included in the reproduction permission ID list L, then the reproduction control section 172 rejects reproduction of the content data and does not output a reproduction instruction signal. Consequently, the reproduction execution section 174 cannot reproduce the content data.

In this manner, the reproduction control section 172 in the present embodiment performs such reproduction limitation that reproduction of content data to which a source ID that is not included in the reproduction permission ID list L is added is inhibited completely. However, the reproduction limitation of content data is not limited to the example just described, but, for example, such reproduction limitation may be used otherwise that the reproduction control section 172 permits reproduction of the content data while restricting the reproduction to only part of the content data in time or in substance, or that the reproduction control section 172 permits reproduction while the picture quality, sound quality, and so forth are degraded, or else that the reproduction control section 172 permits reproduction only for a first predetermined number of times (for example, only once) but inhibits later reproduction.

Further, when the source ID read out from the content data as described above is not included in the reproduction permission ID list L, the reproduction control section 172 outputs the source ID to the list updating requesting section 176.

The reproduction execution section 174 reproduces the designated content data in accordance with an instruction of the reproduction control section 172 described above. The reproduction execution section 174 is formed from, for example, a reproduction apparatus having a content reproduction function or software for content reproduction.

The list updating requesting section 176 performs a process of issuing a request to the list management section 180 for addition of a recorder ID to the reproduction permission ID list L. The update requesting process can be executed typically by outputting an ID addition request signal representative of a recorder ID of an object of addition to the list management section 180.

More particularly, if a source ID that is not included in the reproduction permission ID list L is input from the reproduction control section 172, then the list updating requesting section 176 determines whether the source ID is a recorder ID or a group ID. If a result of the determination indicates that the source ID is a recorder ID, then the list updating requesting section 176 issues a request to the list management section 180 to add the recorder ID to the reproduction permission ID list L. The list updating requesting section 176 may perform the addition requesting process automatically or after a confirmation of the user is obtained regarding whether or not the user wants to add the recorder ID. On the other hand, if the result of the determination indicates that the source ID is a group ID, then the list updating requesting section 176 does not perform the addition request process. This is because only the single group ID received through the group registration can be included in the reproduction permission ID list L.

In this manner, the content reproduction section 170 can reproduce content data to which a source ID having permission of reproduction is added, but limits reproduction of content data to which a source ID having no permission of reproduction is added.

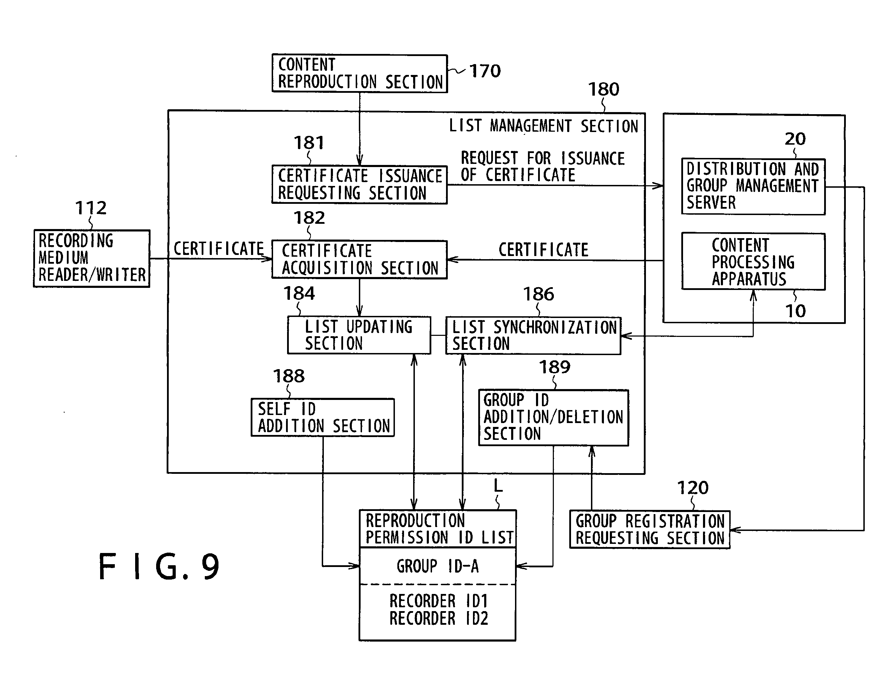

Now, the list management section 180 in the present embodiment is described in detail with reference to FIG. 9.

The list management section 180 includes a certificate issuance requesting section 181, a certificate acquisition section 182, a list updating section 184, a list synchronization section 186, a self ID addition section 188, and a group ID addition/deletion section 189.

The certificate issuance requesting section 181 transmits a certificate issuing request to issue a group certificate G to another content processing apparatus 10 or to the distribution and group management server 20. For example, the certificate issuance requesting section 181 issues a notification of a group ID of an object of a request for addition, received from the content reproduction section 170, to a particular one of the content processing apparatuses 10 or to the distribution and group management server 20 so as to request a group certificate G including the recorder ID. Alternatively, the certificate issuance requesting section 181 may transmit the group ID owned by the content processing apparatus 10 itself to an arbitrary one of the content processing apparatuses 10 or to the distribution and group management server 20 so as to request a group certificate G including one or more recorder IDs associated with the group ID-that is, one or more recorder IDs of the other content processing apparatuses 10 that belong to the same apparatus group.

The certificate acquisition section 182 acquires a group certificate G from an external content processing apparatus 10 or from the distribution and group management server 20. More particularly, the certificate acquisition section 182 can utilize the communication apparatus 110 to receive and acquire, via the network 5 or a local line 9, a group certificate G transmitted from an external content processing apparatus 10 or from the distribution and group management server 20. Further, the certificate acquisition section 182 can utilize the recording medium reader/writer 112 to read out and acquire a group certificate G recorded on a recording medium 7 as provided from an external content processing apparatus 10 or from the distribution and group management server 20. The certificate acquisition section 182 outputs a group certificate G acquired in this manner to the list updating section 184.

The list updating section 184 adds a recorder ID to the reproduction permission ID list L based on a group certificate G input from the certificate acquisition section 182. More particularly, the list updating section 184 reads out from the group certificate G a group ID applied to a different content processing apparatus 10. The read out group ID is a group ID (second group ID) corresponding to the user who owns the different content processing apparatus 10. The list updating section 184 further reads out a group ID (first group ID) stored in the storage apparatus 114 of the content processing apparatus 10 in which the list updating section 184 is provided, typically in the reproduction permission ID list L of the storage apparatus 114, and corresponding to the user who owns the content processing apparatus 10 itself. Then, the content processing apparatus 10 determines whether or not the two group IDs coincide with each other. If a result of the determination indicates that the first group ID and the second group ID coincide with each other, then the content processing apparatus 10 reads out the recorder ID included in the group certificate G, corresponding to the different content processing apparatus 10, and adds the read out recorder ID to the reproduction permission ID list L. On the other hand, if the first group ID and the second group ID do not coincide with each other, then the content processing apparatus 10 does not add the recorder ID included in the group certificate G to the reproduction permission ID list L.

By adopting such a recorder ID addition criterion as just described, only those recorder IDs corresponding to those content processing apparatuses 10 (PCs or recording devices) registered in the same apparatus group are permitted to be added to the reproduction permission ID list L.

The list updating section 184 may further limit addition of a recorder ID by providing an upper limit to the number of recorder IDs that can be included in the reproduction permission ID list L, in addition to such a recorder ID addition criterion as described above.

The list synchronization section 186 has a function of synchronizing a plurality of reproduction permission ID lists L. The synchronization of the reproduction permission ID lists L here signifies merging of the plural reproduction permission ID lists L, and the reproduction permission ID lists L after being synchronized include all of the recorder IDs that have been included in the plural original reproduction permission ID lists L in proper quantities.

The synchronization process of the reproduction permission ID lists can be executed only between those content processing apparatuses 10 that possess the same group ID. More particularly, the list synchronization section 186 accesses the reproduction permission ID list L of another content processing apparatus 10 and synchronizes the reproduction permission ID lists L of the two content processing apparatuses 10 only when the group ID included in the reproduction permission ID list L of the accessed content processing apparatus 10 and the group ID included in the reproduction permission ID list L of the content processing apparatus 10 in which the list synchronization section 186 is provided coincide with each other.

By the synchronization process described, the recorder IDs included in the reproduction permission ID lists L provided in the plural content processing apparatuses 10 registered in the same apparatus group can be made the same as each other. Therefore, the plural content processing apparatuses 10 can share and mutually reproduce content data produced thereby.

It is to be noted that the synchronization process may be performed periodically or automatically at an arbitrary time, for example, by the list synchronization section 186 between the content processing apparatus 10 in a private network, or may be performed by a content processing apparatus 10 with another designated particular content processing apparatus 10 in response to an instruction of a user. Such a synchronization process can be executed not only between content processing apparatuses 10 connected to each other by a private network or between content processing apparatuses 10 connected to each other by a local line 9, but also between content processing apparatuses 10 connected remotely from each other via the network 5.

The self ID addition section 188 adds to the reproduction permission ID list L, for example, without any condition, a recorder ID corresponding to the content processing apparatus 10 in which the self ID addition section 188 is provided. More particularly, the self ID addition section 188 reads out, typically from the self ID database 116 of the storage apparatus 114, a recorder ID corresponding to the content processing apparatus 10 and writes the read out recorder ID into the reproduction permission ID list L. Consequently, the content processing apparatus 10 can reproduce content produced by the content processing apparatus 10 itself, irrespective of the presence or absence of a group registration.

The group ID addition/deletion section 189 writes, if a group registration notification and a group ID included in a notification from the distribution and group management server 20 are inputted thereto, the group ID into the reproduction permission ID list L. Consequently, the content processing apparatus 10 is thereafter enabled to reproduce any distribution content data to which the group ID is added.

On the other hand, if a group registration cancellation notification is input from the group registration requesting section 120, then the group ID addition/deletion section 189 deletes all source IDs (recorder ID and group ID) included in the reproduction permission ID list L. However, only the recorder ID that corresponds to the content processing apparatus 10 itself is not deleted from the reproduction permission ID list L. Consequently, the content processing apparatus 10 is thereafter enabled to reproduce only production content data produced by the content processing apparatus 10 itself and content data that is not an object of copyright management.

It is to be noted that the list management section 180 can interpret the reproduction permission ID list L, which may be in an encrypted form for the prevention of falsification, and update the reproduction permission ID list L without altering the signature applied to the reproduction permission ID list L.

The list management section 180 has such a configuration as described above. Thus, the list management section 180 determines whether or not the content processing apparatus 10 in which the list management section 180 is provided and a different content processing apparatus 10 belong to the same apparatus group, depending upon whether or not the group IDs of the two content processing apparatuses 10 are coincident with each other. Then, only when it is determined that the different content processing apparatus 10 belong to the same apparatus group, the list management section 180 adds the recorder ID of the different content processing apparatus 10 to the reproduction permission ID list L. Consequently, distribution content and production content can be shared freely between those content processing apparatuses 10 that are registered in the same apparatus group. On the other hand, reproduction of content data is limited and illegal utilization of content data can be prevented between those content processing apparatuses 10 that are registered in different apparatus groups or between those content processing apparatuses 10 that are not yet registered.

It is to be noted that while the list management section 180 in the example described above updates the reproduction permission ID list L of the content processing apparatus 10 in which the list management section 180 is provided, it may otherwise update the reproduction permission ID list L of another content processing apparatus 10. For example, the list management section 180 of a content processing apparatus 10A, such as a PC, may update the reproduction permission ID list L of another content processing apparatus 10B or 10C, such as a recording device or a PD. Further, a single list management section 180 may be provided for a plurality of content processing apparatuses 10 in a private network such that it manages the reproduction permission ID lists L of all of the content processing apparatuses 10 in a concentrated manner. In this instance, the list management section 180 is preferably provided in a private network connecting server apparatus or the like.

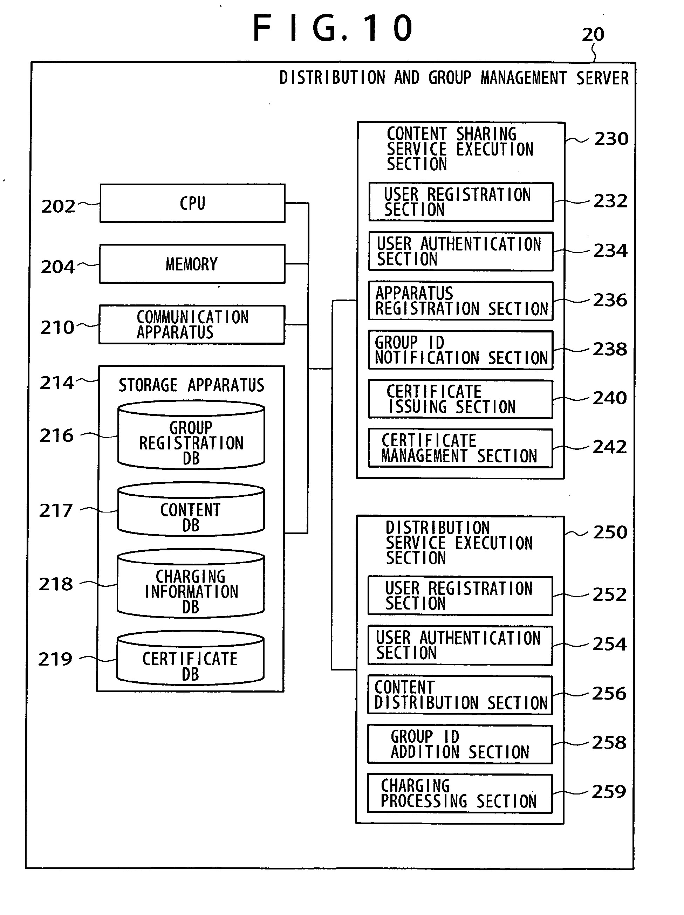

Now, the distribution and group management server 20 in the present embodiment is described in detail with reference to a block diagram of FIG. 10.

The distribution and group management server 20 includes a CPU 202, a memory 204, a communication apparatus 210, a storage apparatus 214, a content sharing service execution section 230, and a distribution service execution section 250. It is to be noted that the CPU 202, memory 204, and communication apparatus 210 have substantially the same functional configuration as the CPU 102, memory 104, and communication apparatus 110, respectively, of the content processing apparatus 10 described above, and therefore detailed description of them is omitted to avoid redundancy.

The storage apparatus 214 is an apparatus for storing data, is formed from, for example, a hard disk drive, and can store various data of programs and so forth. Further, the storage apparatus 214 has a group registration database 216, a content database 217, a charging information database 218, and a certificate database 219 stored therein.

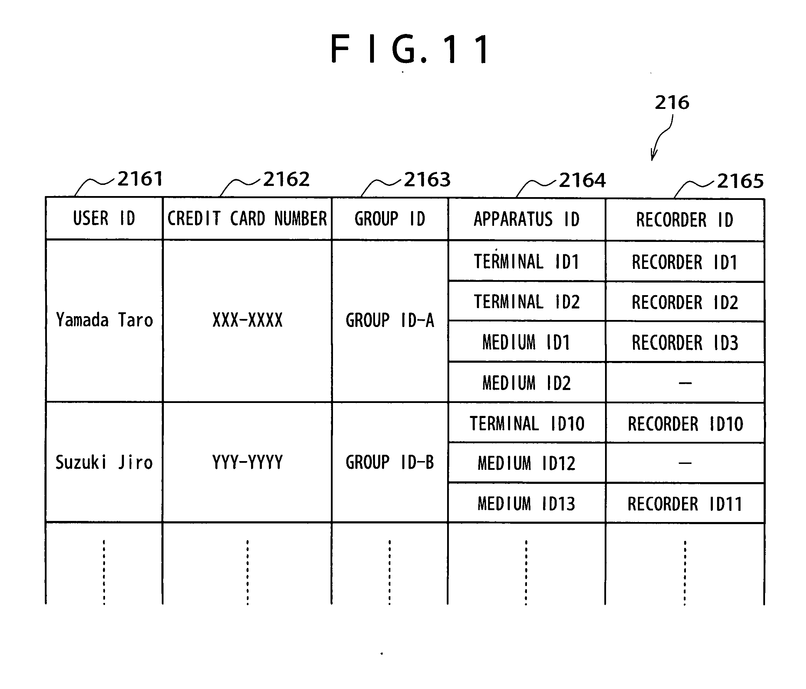

Referring to FIG. 11, the group registration database 216 stores user account information (a user ID 2161 and a credit card number 2162) of a user who enjoys provision, for example, of a content sharing service and a content distribution service, and a group ID 2163 corresponding to the user. The group registration database 216 further stores apparatus IDs 2164 of content processing apparatus 10 placed in a group registration, and recorder IDs 2165 of those of the content processing apparatus 10 placed in the group registration which have a content recording function. The user account information (user ID 2161 and credit card number 2162), group ID 2163, apparatus IDs 2164, and recorder IDs 2165 are stored in a coordinated relationship with each other in the group registration database 216. A single user ID (user account) 2161 corresponds to a single group ID 2163, for example. Further, the group ID 2163 of each user is coordinated with the apparatus IDs 2164 (terminal IDs or medium IDs) of one or more content processing apparatus 10 registered in the apparatus group represented by the group ID. Furthermore, the recorder IDs of the content processing apparatuses 10A and 10B (PCs, recording devices, and so forth) having a recording function are associated with the group ID.

Referring back to FIG. 10, the content database 217 is a database of a plurality of content data that are an object of distribution of a content distribution service. The charging information database 218 includes charging information for the individual users. The certificate database 219 stores a group certificate G issued by the certificate issuing section 250, hereinafter described, and group certificates G acquired from the other content processing apparatuses 10.

The content sharing service execution section 230 executes a content sharing service of placing a plurality of content processing apparatuses 10 owned by the same user into a group registration and sharing content data between the content processing apparatuses 10 placed in the group registration in this manner. The content sharing service execution section 230 is formed typically from content sharing service software installed in the distribution and group management server 20.

The content sharing service execution section 230 includes a user registration section 232, a user authentication section 234, an apparatus registration section 236, a group ID notification section 238, a certificate issuing section 240, and a certificate management section 242.

The user registration section 232 performs a registration process of a new user who wants to utilize the content sharing service, a registration changing process, a registration canceling process, management of user account information (user IDs, credit numbers, and so forth), and other necessary processes. A unique group ID is applied in terms of a unit of a user (in terms of a unit of an apparatus group) to each of the users registered in the content sharing service. By a registration process of the user registration section 232, various pieces of user account information and group IDs input and determined are stored into the group registration database 216.

The user authentication section 234 performs a user authentication process of authenticating, in response to a connection request (registration request, registration cancellation request, user account information changing request or the like) from a content processing apparatus 10 owned by a user registered in the content sharing service in such a manner as described above, the user who owns the content processing apparatus 10 of the source of the request. The user authentication process is performed based on the user account information, and so forth, input by the user and on user account information of the group registration database 216. If the user is authenticated successfully, then the user is permitted to log in the apparatus registration section 236.

The apparatus registration section 236 registers the content processing apparatus 10 of the source of the registration request into the apparatus group owned by the authenticated user. The group registration process is performed when the group registration requesting information (for example, a group registration requesting notification, a user ID, a credit card number, an apparatus ID) is received from the group registration requesting section 120 of the content processing apparatus 10, and the user authentication process is performed successfully. When the content processing apparatus 10 of the source of the registration request is to be placed into a group registration, the apparatus ID (terminal ID and medium ID) of the content processing apparatus 10 of the source of the registration request is stored into a place of the column for the apparatus IDs 2164 of the group registration database 216 that corresponds to the authenticated user. Consequently, the apparatus ID placed in the group registration and the group ID (apparatus group) applied to the authenticated user are coordinated with each other.

Further, the apparatus registration section 236 inhibits the same content processing apparatus 10 from being registered in different apparatus groups. To this end, the apparatus registration section 236 searches the group registration database 216. Then, if the apparatus ID of the content processing apparatus 10 of the source of the registration request is already stored in the group registration database 216, then the apparatus registration section 236 rejects registration of the content processing apparatus 10 so that the apparatus ID may not be written into the group registration database 216. Consequently, it is possible to restrict registration of one content processing apparatus 10 so that the content processing apparatus 10 belongs to only one apparatus group.

Furthermore, the apparatus registration section 236 can set an upper limit number of the content processing apparatuses 10 that can be registered into the same apparatus group, or more particularly an upper limit number of the content processing apparatuses 10 that can be coordinated with the same group ID. For example, the apparatus registration section 236 may set an upper limit number (for example, 3) of terminal IDs that can be coordinated with the same group ID. In this instance, if a number of registration requests exceeding the upper limit number are received from content processing apparatuses 10A (information processing apparatuses such as PCs) having a terminal ID as an apparatus ID, then the apparatus registration section 236 rejects the registration. Consequently, since the number of content processing apparatuses 10A (PCs or the like) that can be registered into the same apparatus group can be limited, for example, to three, the number of content processing apparatuses 10A that can receive distribution content data in the same apparatus group can be restricted.

As another example of the upper limit number, the apparatus registration section 236 may set an upper limit number (for example, 10) of recorder IDs that can be coordinated with the same group ID. In this instance, if a number of registration requests exceeding the upper limit number are received from content processing apparatuses 10A and/or 10B (PCs, recording devices, and so forth) that can record content to which a recorder ID is applied, then the apparatus registration section 236 rejects the registration. Consequently, since the number of content processing apparatuses 10A and/or 10B (PCs, recording devices, and so forth) that have a recording function and can be registered into the same apparatus group can be limited, the number of content processing apparatuses 10A in the same apparatus group that can produce production content data can be restricted.

The apparatus registration section 236 receives a group certificate G from a content processing apparatus 10 placed in the group registration, as described above, to acquire the recorder ID of the content processing apparatus 10. The group certificate G is issued by and transmitted from the content processing apparatus 10 in response to a notification process of a group ID by the group ID notification section 238 hereinafter described. The apparatus registration section 236 writes the acquired recorder ID into the column for recorder IDs 2165 of the group registration database 216 in a coordinated relationship with the group ID included in the group certificate G.

Further, the apparatus registration section 236 cancels from the apparatus group owned by an authenticated user the registration of a content processing apparatus 10 of the source of a registration cancellation request. This group registration cancellation process is executed, for example, when the apparatus registration section 236 receives group registration cancellation request information (for example, a group registration cancellation request notification, a user ID, a credit card number, an apparatus ID) from the group registration requesting section 120 of the content processing apparatus 10, and when the user authentication process described above is performed successfully. In order to cancel the group registration of the content processing apparatus 10 of the source of the registration cancellation request, the apparatus ID (terminal ID or medium ID) and the group ID of the content processing apparatus 10 of the source of the registration cancellation are deleted from the apparatus ID 2164 and the group ID 2163 columns of the group registration database 216.

When the content processing apparatus 10 is registered into a predetermined apparatus group by the apparatus registration section 236, the group ID notification section 238 issues to the registered content processing apparatus 10 a notification of the group ID corresponding to the authenticated user (registered apparatus group). The group ID notification process may be performed by transmitting only the group ID to the registered content processing apparatus 10 or by issuing a request to the certificate issuing section 240, hereinafter described, to issue a group certificate G that includes the group ID.

The certificate issuing section 240 issues and distributes a group certificate G for certifying an apparatus group to which a registered content processing apparatus 10 belongs. For example, when a request for issuance is received from the certificate issuance requesting section 181 of a content processing apparatus 10, the certificate issuing section 240 reads out from the group registration database 216 the group ID and the recorder ID in response to the request for issuance, produces such a group certificate G as shown in FIG. 7, and transmits via network 5 the group certificate G to the content processing apparatus 10 of the source of the request for issuance. Otherwise, the certificate issuing section 240 may issue and distribute the latest group certificate G periodically without reception of a request for issuance or when the content processing apparatus 10 accesses the distribution and group management server 20. Or else, the certificate issuing section 240 may issue a group certificate G when a notification of a group ID is issued to a content processing apparatus 10 having been placed into a group registration in such a manner as described above.

Further, the certificate issuing section 240 may add validity term information to a group certificate G to be issued. Where a group certificate G has validity term information added thereto in this manner, the content processing apparatus 10 that acquires the group certificate G is permitted to add a recorder ID included in the group certificate G to the reproduction permission ID list L only within the term of validity represented by the validity term information included in the group certificate G. Therefore, it is possible to control the content processing apparatus 10 so that it can reproduce content data only within the term of validity set in the group certificate G.

Furthermore, the certificate issuing section 240 may include a plurality of recorder IDs coordinated with the same group ID in one group certificate G. This efficiently allows simultaneous distribution with a single group certificate G of recorder IDs of all content processing apparatuses 10 with a recording function that belong to the same apparatus group.

It is to be noted that the certificate issuing section 240 may be provided only in the distribution and group management server 20 without providing the certificate issuing section 190 in the content processing apparatuses 10. This makes it possible for the distribution and group management server 20 to manage all group certificates G.

The certificate management section 242 stores and manages in the certificate database 219 a group certificate G issued by the certificate issuing section 240 and group certificates acquired from the content processing apparatuses 10. Where the group certificates G are stored in this manner, the certificate management section 242 can read out a past group certificate G from the certificate database 219 and distribute it to a content processing apparatus 10 or the like.. It is to be noted that the certificate database 219 may be formed integrally with the group registration database 216. In this instance, the certificate management section 242 manages group certificates G based on the certificate database 219.

Further, the certificate management section 242 can manage an issuance history of group certificates G (for example, issuing time, distribution destination, issued number, and so forth). This makes it possible for the certificate management section 242 to limit the number of group certificate G that can be issued by a certain user so as set an upper limit number of content processing apparatuses 10 that can be registered by the user.

Where the certificate issuing section 240 and the certificate management section 242 are provided as described above, group certificates G can be managed by the distribution and group management server 20. Consequently, a group certificate G can be acquired without interconnecting the different content processing apparatuses 10. Further, where the group certificates G are managed in a concentrated manner by the distribution and group management server 20, a content processing apparatus 10 can normally acquire the latest group certificate G. For example, a content processing apparatus 10 can acquire all of the latest group certificates G relating to the group ID of the same user and acquire all of the latest recorder IDs that belong to the group ID and then add them to the reproduction permission ID list L.

Now, the distribution service execution section 250 is described. The distribution service execution section 250 performs a content distribution service, for example, for pay, of distributing content data to a user of a content processing apparatus 10. The distribution service execution section 250 is formed typically from content distribution service software installed in the distribution and group management server 20. The distribution service execution section 250 includes a user registration section 252, a user authentication section 254, a content distribution section 256, a group ID addition section 258, and a charging processing section 259.

The user registration section 252 performs a registration process of a new user who wants to utilize the content distribution service, a registration changing process, a registration cancellation process, management of user account information (a user ID, a credit number, and so forth), and so forth. To a user registered in the content distribution service, a unique distribution service user ID is set in terms of a unit of a user. In the present embodiment, the distribution service user ID is same as the group ID used for the content distribution service. Various kinds of user information input and determined by a registration process by the user registration section 252 are stored into a distribution service user information database. In the present embodiment, the distribution service user information database is same as the group registration database 216.

The user authentication section 254 performs a user authentication process in response to a request for connection, for example, from a user registered in the content distribution service in such a manner as described above. The user authentication process is performed, for example, based on user account information input by the user and on user account information of the group registration database 216. The authenticated user is permitted to log in the content distribution section 256.

The user registration 252 and the user authentication section 254 may be formed integrally with the user registration section 242 and the user authentication section 244, respectively, of the content sharing service execution section 230 described above. In this instance, the distribution service execution section 250 may not include any of the user registration section 252 and the user authentication section 254.

The content distribution section 256 allows, for example, a user having been authenticated to access a list of content data that can be distributed and to select the content data that the user wants to be distributed. Further, the content distribution section 256 distributes via network 5 the selected content data to the content processing apparatus 10 that is utilized by the user. It is to be noted that the distribution process is performed, for example, with a charging process described below.

The group ID addition section 258 is a component corresponding to the source ID addition section 1 described above with reference to FIG. 2. The group ID addition section 258 adds the group ID corresponding to the authenticated user to the distribution content data to be distributed to a content processing apparatus 10 by the content distribution section 256. The group ID added in this manner functions as a source ID for the distribution content data. Since a group ID is added to distribution content data on the distribution and group management server 20 side in this manner, and the distribution content data having the group ID added thereto is distributed, the group ID as a source ID can be added with certainty to the distribution content data, and the copyright management function can be strengthened.

It is to be noted that the group ID addition section 258 may otherwise be provided in a content processing apparatus 10 that receives distribution content data distributed thereto. In this instance, the content processing apparatus 10 may add the group ID to the distribution content data when it receives distribution content from the distribution and group management server 20 or the like.

The charging processing section 259 performs a charging process for issuing, for example, to a user to whom content data is distributed, a claim for payment of an amount of money corresponding to the distributed distribution content data. Charging information such as the amount of money claimed, a settlement method, and a settlement date involved in the charging process are stored, for example, into the charging information database 218.

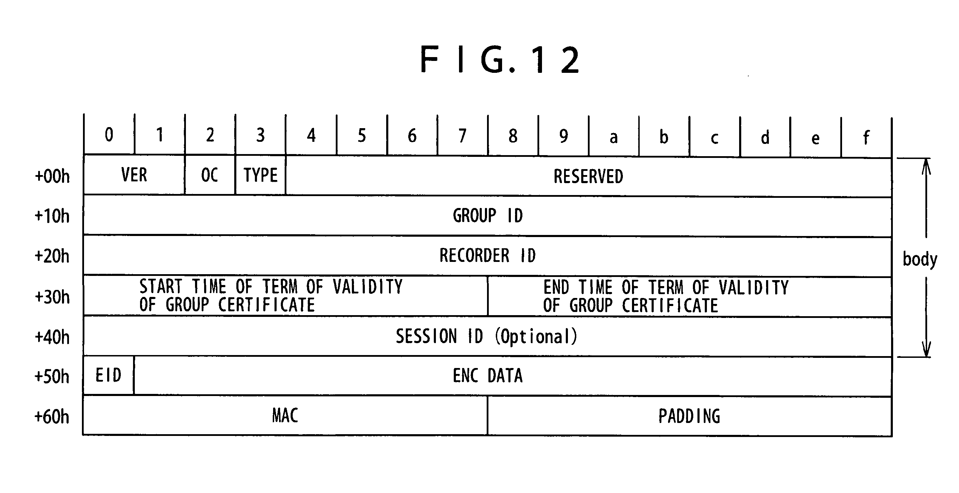

Now, a data structure of a group certificate G in the present embodiment is described with reference to FIG. 12.

The group certificate G includes "VER", "OC", "TYPE", "group ID", "recorder ID", "start time of term of validity of group certificate", "end time of term of validity of group certificate", "Session ID", "EID", "ENC DATA", "MAC", and "PADDING".

The "VER" represents the format version of the group certificate G. The "OC" represents an operation code that designates an operation when the group certificate G is applied to the reproduction permission ID list L. The "TYPE" represents a type of the source ID (for distribution content or for production content). The "EID" represents an ID of the algorithm used upon production of a MAC. The "ENC DATA" represents a version of EKB used upon production of a MAC. The "MAC" represents a code for falsification detection as described above.

In this manner, the group certificate G has a structure wherein a group ID and a recorder ID are coordinated with each other. In order to prevent falsification of the group certificate G, a hash value of the group certificate G may, for example, be utilized so that falsification can be detected.

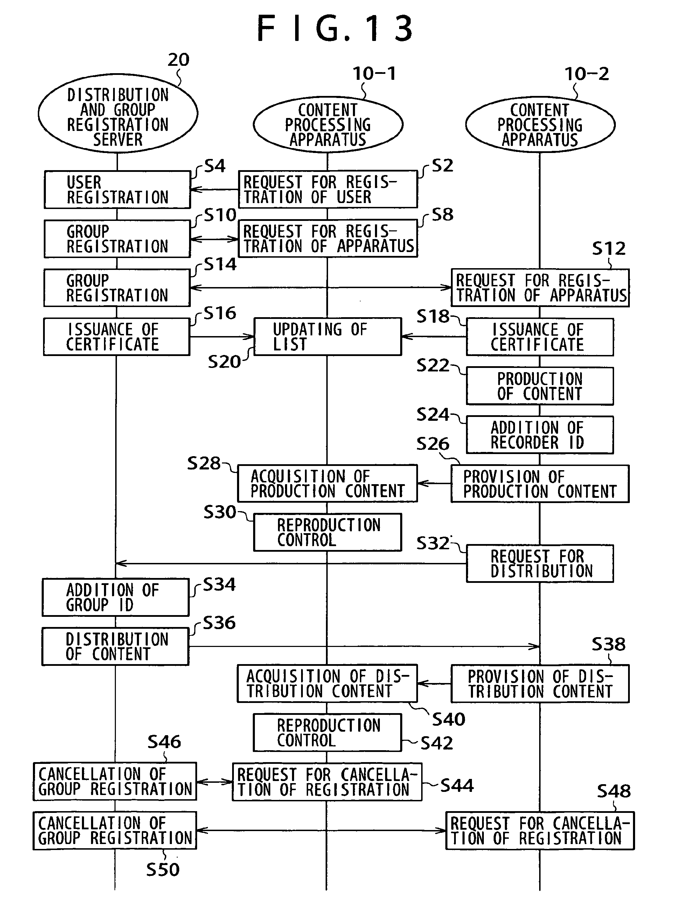

Now, a basic flow of a content sharing method wherein the content sharing system 100 having such a configuration as described above is described with reference to a flow diagram of FIG. 13.

First at step S2, a new user would use one of the content processing apparatuses 10 owned thereby, such as, for example, content processing apparatus 10-1, to issue a request for user registration in a content sharing service to the distribution and group management server 20. In response to the request for registration, the distribution and group management server 20 performs a user authentication process of the user, applies a new group ID to the user, and places the user into a user registration at step S4. It is to be noted that the user registration of the content sharing service may serve also as user registration of a content distribution service.

Then, the user would use the content processing apparatuses 10-1 and 10-2, owned thereby, to issue a request for registration of them at steps S8 and S12. In response to the requests for registration of the apparatus, the distribution and group management server 20 places the content processing apparatuses 10-1 and 10-2 into a group registration of one of apparatus groups and issues a notification of a group ID corresponding to the registered apparatus group at steps S10 and S14. It is to be noted that such apparatus group registrations of the different content processing apparatuses 10 as just described need not be performed simultaneously but may be performed separately at different arbitrary times.

Further, the distribution and group management server 20 issues a group certificate G wherein the group ID corresponding to the content processing apparatus 10-2 and the recorder ID are coordinated with each other, and then it distributes the group certificate G to the content processing apparatus 10-1 at step S16. Alternatively, the content processing apparatus 10-2 may issue a group certificate G wherein the group ID corresponding to the content processing apparatus 10-2 itself and the recorder ID are coordinated with each other, and then distribute the group certificate G to the content processing apparatus 10-1 (at step S18).

At step S20, the content processing apparatus 10-1 acquires the group certificate G issued in this manner and performs an updating process of the reproduction permission ID list L provided therein. In the list updating process, if the content processing apparatuses 10-1 and 10-2 are registered in the same apparatus group in the group registration, the content processing apparatus 10-1 adds the recorder ID of the content processing apparatus 10-2 included in the group certificate G to the reproduction permission ID list L provided therein. On the other hand, if the content processing apparatuses 10-1 and 10-2 are registered in different apparatus groups, then the content processing apparatus 10-1 cannot add the recorder ID included in the group certificate G to the reproduction permission ID list L provided therein.

In the following, a case wherein content data provided from the content processing apparatus 10-2 are acquired by the content processing apparatus 10-1 and shared between the content processing apparatuses 10-1 and 10-2 in such a state as described above is described.

First, in order to share production content data, at step S22 the content processing apparatus 10-2 produces content data by ripping, self recording, or the like and at step S24 adds the recorder ID corresponding to the content processing apparatus 10-2 to the production content data. Then, at step S26 the content processing apparatus 10-2 provides the production content data having the recorder ID added thereto to the content processing apparatus 10-1 via the network 5, a local line 9, or a recording medium 7.

Then, at step S28 the content processing apparatus 10-1 acquires the production content data and at step S30 executes a reproduction control process of the production content data, for example, in response to a reproduction request of the user. In this instance, if the recorder ID added to the production content data is included in the reproduction permission ID list L of the content processing apparatus 10-1, then the content processing apparatus 10-1 can reproduce the production content data. However, if the recorded ID is not included in the reproduction permission ID list L, then the content processing apparatus 10-1 cannot reproduce the production content data.

On the other hand, in order to share distribution content data, at step S32 the content processing apparatus 10-2 first issues a request for distribution to the distribution and group management server 20. In response to the request for distribution, at step S34 the distribution and group management server 20 adds the group ID corresponding to the content processing apparatus 10-1 to the distribution content data of an object of the request for distribution and at step S36 distributes the distribution content data to the content processing apparatus 10-2. Thereafter, at step S38 the content processing apparatus 10-2 provides the distribution content data having the group ID added thereto to the content processing apparatus 10-1, and at step S40 the content processing apparatus 10-1 acquires the distribution content data. Then, at step S42 the content processing apparatus 10-1 executes a reproduction control process of the distribution content data, for example, in response to a reproduction request of the user. In this instance, if the group ID added to the distribution content data is included in the reproduction permission ID list L of the content processing apparatus 10-1, then the content processing apparatus 10-1 can reproduce the production content data. However, if the group ID is not included in the reproduction permission ID list L, then the content processing apparatus 10-1 cannot reproduce the distribution content data.

Further, if at step S44 or S48 either of the content processing apparatuses 10-1 and 10-2 issues a registration cancellation request, then at step S46 or S50 the distribution and group management server 20 cancels the group registrations of the content processing apparatuses 10-1 and 10-2 in response to the registration cancellation request.

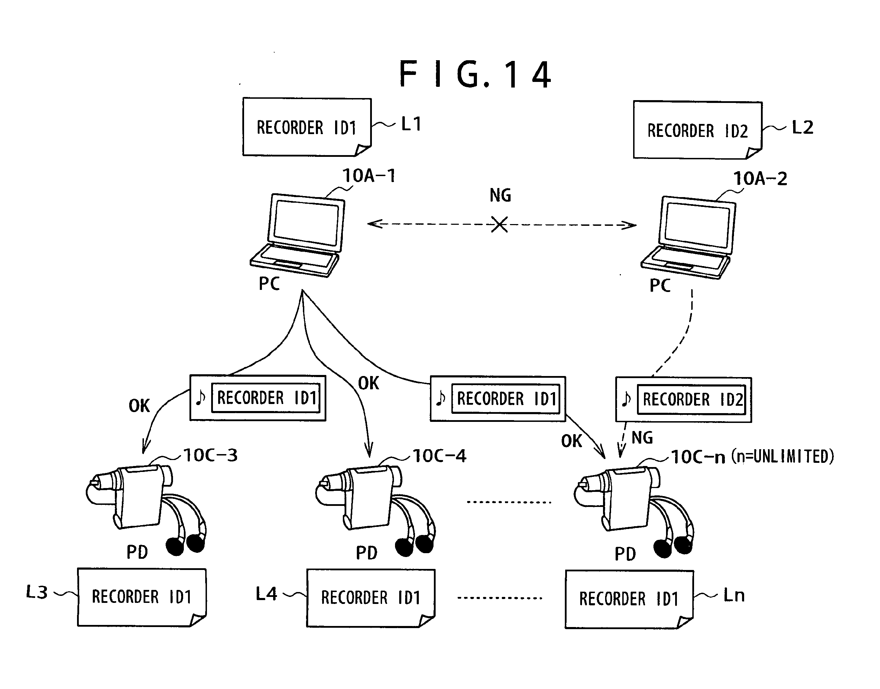

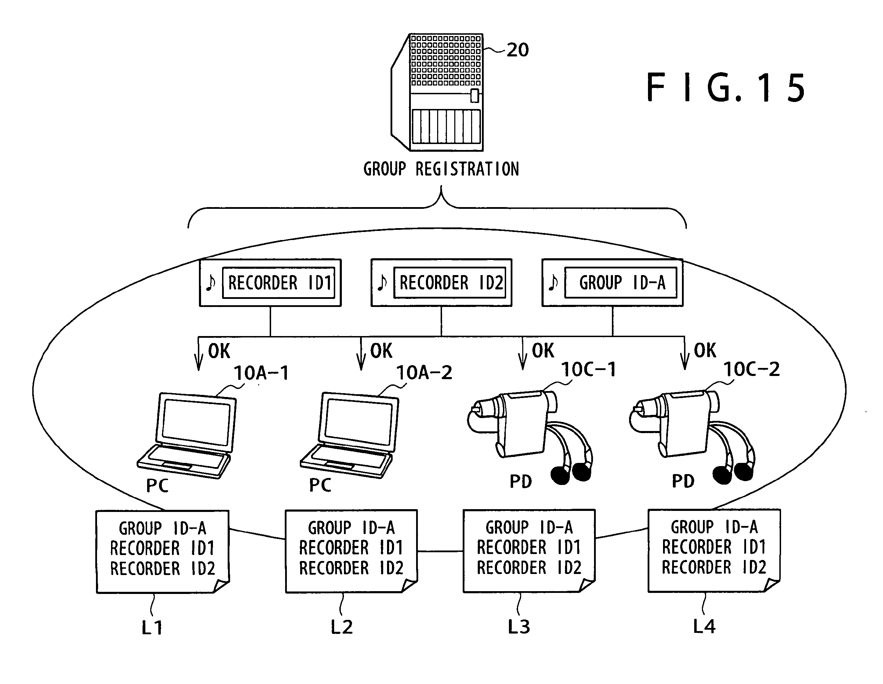

In such a content sharing method of the content sharing system 100 as described above, if a plurality of content processing apparatuses 10 owned by the same user are registered into the same apparatus group, then production content data and distribution content data can be shared comparatively freely between the plural content processing apparatuses 10. Here, a state before the group registration and another state after the group registration are described with reference to FIGS. 14 and 15.

As seen in FIG. 14, in a state before group registration, the content processing apparatuses 10A-1 and 10A-2, such as PCs, include only the recorder IDs ID1 and ID2 in their respective reproduction permission ID lists L1 and L2. Therefore, the content processing apparatuses 10A-1 and 10A-2 cannot share any production content data between each other. In other words, each of the content processing apparatuses 10A-1 and 10A-2 can reproduce only content data produced by the content processing apparatus 10A-1 or 10A-2 itself.

Meanwhile, content processing apparatuses 10C, such as PDs, can reproduce production content data acquired from an arbitrary one of the content processing apparatuses 10A (PCs and so forth). This is because the content processing apparatuses 10A can be set so as to add only one recorder ID of the content processing apparatus 10A itself to the reproduction permission ID list L of a content processing apparatus 10C. In the example of FIG. 14, the recorder ID1 of the content processing apparatus 10A-1 is added to the reproduction permission ID lists L3 to Ln of a plurality (unlimited number) of content processing apparatuses 10C-3 to 10C-n. Therefore, the content processing apparatuses 10C-3 to 10C-n can reproduce production content of the content processing apparatus 10A-1 (to which the recorder ID1 is added). However, the content processing apparatuses 10C-3 to 10C-n cannot reproduce reproduction content of the content processing apparatus 10A-2 (to which the recorder ID2 is added). In this manner, before group registration, each of the content processing apparatuses 10C, such as PDs, cannot simultaneously share content data of two or more content processing apparatuses 10A, such as PCs.

On the other hand, in another state after group registration into the same group, as seen in FIG. 15, the content processing apparatuses 10 registered in the same group can reproduce all reproduction content data reproduced by them irrespective of whether they are PCs, PDs, or the like. This is because, by registering the content processing apparatuses 10 into the same apparatus group corresponding to the group ID-A, the recorder IDs ID1 and ID2 and the group ID-A can be included into the reproduction permission ID lists L1 to L4 of all of the content processing apparatuseses 10. Accordingly, all of distribution content data to which the group ID-A is added and production content data to which the recorder IDs ID1 and ID2 are added can be shared by and among the content processing apparatuses 10A-1, 10A-2, 10C-1, and 10C-2 placed in the group registration. Further, production content of any content processing apparatus 10 placed once in the group registration may remain capable of being reproduced by the other content processing apparatus 10 even after the content processing apparatus 10 is placed out of the group registration.

Further, though not shown, after all of the content processing apparatuseses 10 registered in a certain apparatus group are placed out of the registration, they are placed into a state similar to that before the registration described above with reference to FIG. 14.

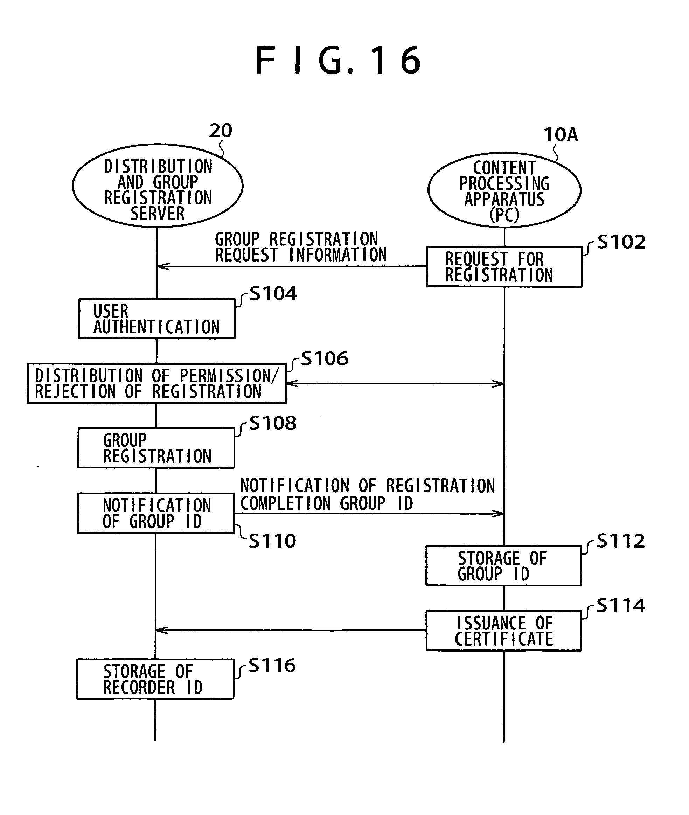

Now, a process (group registration process) of registering a content processing apparatus 10 into an apparatus group owned by a user in the content sharing system 100 in accordance with the present embodiment is described with reference to a timing chart of FIG. 16.

It is assumed that, in a process flow described below, operation is started in a state wherein user registration of the content sharing service into the distribution and group management server 20 is already completed, and a group ID is applied to the user who owns the content processing apparatus 10. Further, in the following process, group registration is performed using a content processing apparatus 10A in the form of a PC, or the like, that can be connected to the distribution and group management server 20.

First, at step S102 the group registration requesting section 120 of the content processing apparatus 10A issues a request for group registration to the distribution and group management server 20. More particularly, the group registration requesting section 120 produces group registration requesting information (for example, a group registration requesting notification, a user ID, a credit card number, an apparatus ID, and so forth) in response to user inputs and transmits the group registration requesting information via network 5 to the distribution and group management server 20.

Then, at step S104 the user authentication section 234 of the distribution and group management server 20 performs an authentication process of the user who owns the content processing apparatus 10A of the source of the registration request. The user authentication process is performed based on whether or not user account information of the group registration database 216 included in the received group registration requesting information and user account information of the group registration database 216 coincide with each other. If the user authentication is not performed successfully, then the registration process is ended. If the user authentication is performed successfully, then the processing advances to step S106.

At step S106, the apparatus registration section 236 of the distribution and group management server 20 determines, based on predetermined registration conditions, whether or not the content processing apparatus 10A of the source of the registration request should be registered into the apparatus group of the authenticated user. The predetermined registration conditions may include an upper limit number of content processing apparatuses 10A that can be registered into the apparatus group of the user. If the registration should not be permitted, then the apparatus registration section 236 produces a registration rejection notification and transmits it to the content processing apparatus 10A, after which the registration process is ended. On the other hand, if the registration is permitted, then the processing advances to step S108.

At step S108, the apparatus registration section 236 of the distribution and group management server 20 registers the content processing apparatus 10A of the source of the registration request into the apparatus group of the authenticated user. More particularly, the apparatus registration section 236 records the apparatus ID (terminal ID or medium ID) of the content processing apparatus 10A of the source of the registration request into the group registration database 216 in a coordinated relationship with the group ID of the authenticated user.

Then, at step S110 the group ID notification section 238 of the distribution and group management server 20 issues a notification of the group ID corresponding to the authenticated user (registered apparatus group) to the registered content processing apparatus 10A. Thereupon, the group ID notification section 238 may produce and transmit a registration completion notification, together with the group ID, to the content processing apparatus 10A.

Further, at step S112 the group ID addition/deletion section 189 of the content processing apparatus 10A stores with safety the group ID received from the distribution and group management server 20 into the content processing apparatus 10A. The received group ID is typically written into the reproduction permission ID list L stored in the storage apparatus 114.

Then, at step S114 the certificate issuing section 190 of the content processing apparatus 10A issues a group certificate G, wherein the recorder ID of the content processing apparatus 10A and the received group ID are coordinated with each other, and transmits the group certificate G to the distribution and group management server 20.

Then, at step S116 the apparatus registration section 236 of the distribution and group management server 20 writes the recorder ID, included in the group certificate G received from the registered content processing apparatus 10A, into the group registration database 216 in a coordinated relationship with the group ID of the authenticated user. Consequently, coordination between the group ID and the recorder ID of the registered content processing apparatus 10A is established in the distribution and group management server 20.

The group registration process of the content processing apparatus 10A, such as a PC, is completed therewith. It is to be noted that, in order to re-register an already registered content processing apparatus 10, the registration of the content processing apparatus 10 must be canceled once.

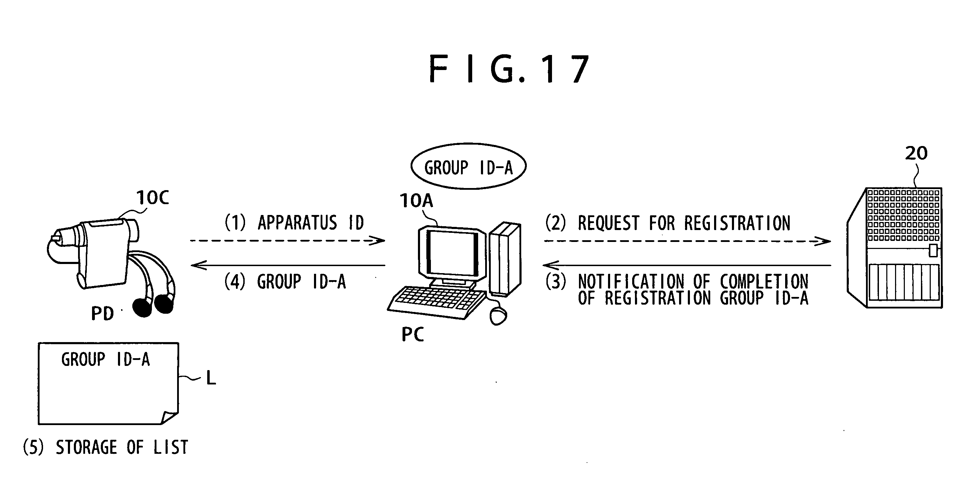

In order to place a content processing apparatus 10B that is a recording device, or the lik,e or a content processing apparatus 10C that is a PD, or the like, into a group registration, the content processing apparatus 10B or 10C of an object of registration is connected, for example, locally to a content processing apparatus 10A owned by the same user and placed in the group registration already, as seen in FIG. 17.

Thus, to request for registration the content processing apparatus 10A first acquires the apparatus ID of the content processing apparatus 10C and transmits group registration requesting information including the apparatus ID to the distribution and group management server 20. Then, the content processing apparatus 10C is registered into the same apparatus group as the content processing apparatus 10A by the distribution and group management server 20. Thereafter, when the content processing apparatus 10A receives a registration completion notification from the distribution and group management server 20, it issues a notification of the group ID-A owned thereby to the content processing apparatus 10C. The content processing apparatus 10C stores with safety the received group ID-A into the reproduction permission ID list L provided therein. The registration process of the content processing apparatus 10C is completed therewith.

It is to be noted that, in order to register a content processing apparatus 10B that is a recording device or the like, the following process is performed in addition to such a registration process as of the content processing apparatus 10C described above. In particular, the content processing apparatus 10A representatively issues a group certificate G, including the recorder ID of the content processing apparatus 10B, to notify the distribution and group management server 20, and the distribution and group management server 20 stores the recorder ID into the group registration database 216.

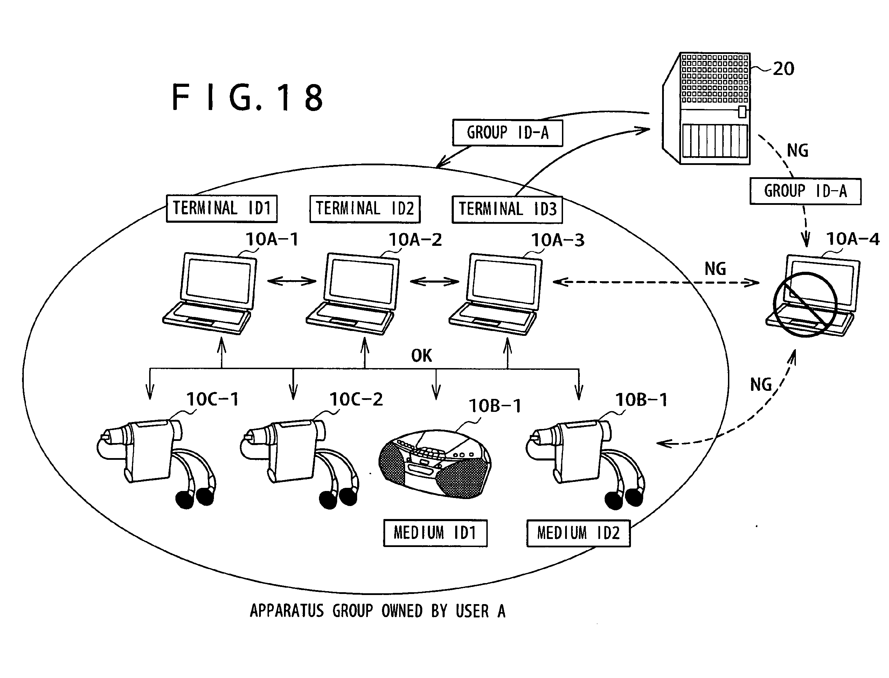

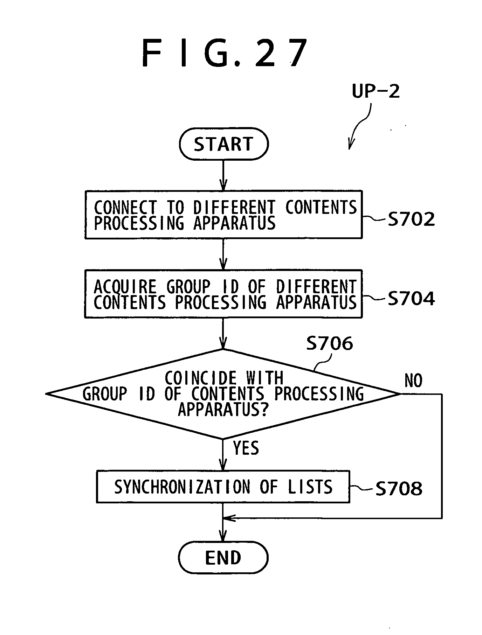

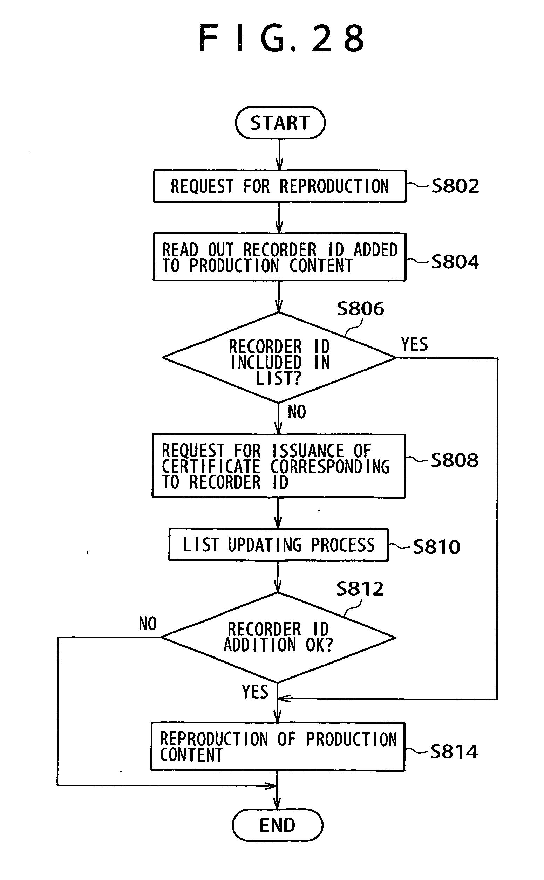

Now, the limitation to the number of content processing apparatuses 10 that can be registered into the same apparatus group, as described above in connection with step S106, is described. Here, as examples, the number limitation of content processing apparatuses 10 is described taking the number limitation (refer to FIG. 18) of content processing apparatuses 10A (PCs and so forth) that can receive distribution content data, as illustrated in FIG. 27, and the number limitation (refer to FIG. 18) of content processing apparatuses 10A (PCs and so forth) having a content sound recording function, as illustrated in FIG. 28.

The number of content processing apparatuses 10A (PCs or the like) that can receive distribution content data can be limited so that only a predetermined upper limit number (for example, 3) of such content processing apparatuses 10A can be registered in the same apparatus group.

This number limitation can be performed by the apparatus registration section 236 of the distribution and group management server 20. Typically, the apparatus registration section 236 counts the number of terminal IDs coordinated with the same group ID in the group registration database 216 and, after the number of terminal IDs reaches the predetermined upper limit number, rejects registration of a subsequent content processing apparatus 10A. By this, the registered number of content processing apparatuses 10A that can receive distribution content data in the same apparatus groups can be limited to the predetermined upper limit number. It is to be noted that, where this number limitation is adopted, it does not limit the number of content processing apparatuses 10B (recording devices and so forth), each of which has a medium ID, and content processing apparatuses 10C (PDs and so forth).

Further, it is possible to limit the number of content processing apparatuses 10A (PCs and so forth) and content processing apparatuses 10B (recording devices) that can record content data so that a number of such content processing apparatuses greater than a predetermined upper limit number (for example, 10) cannot be registered in the same apparatus group.

Also this number limitation can be performed by the apparatus registration section 236 of the distribution and group management server 20. Typically, the apparatus registration section 236 counts the number of terminal IDs coordinated with the same group ID in the group registration database 216, and after the number of terminal IDs reaches the predetermined upper limit number, rejects registration of a subsequent content processing apparatus 10A or 10B. By this, the registered number of content processing apparatuses 10 that have a content recording function in the same apparatus groups can be limited to the predetermined upper limit number. It is to be noted that if this number limitation is adopted, it does not limit the number of content processing apparatuses 10C (PDs and so forth) that have no recorder ID.

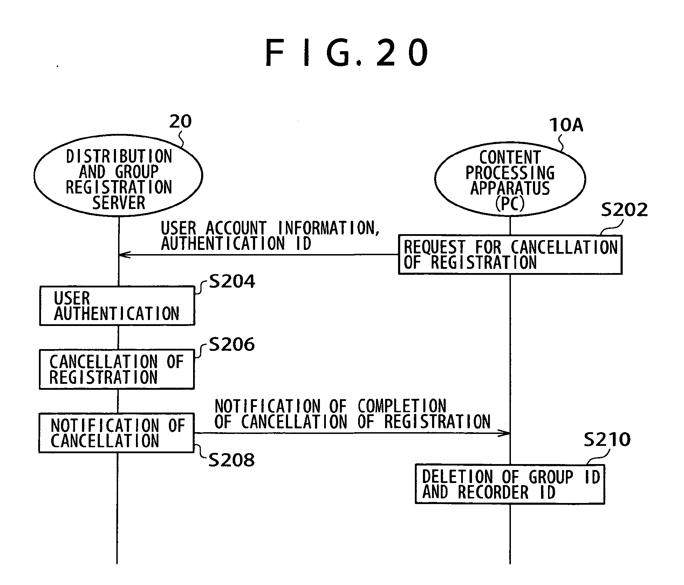

Now, a group registration cancellation process of canceling a group registration of content processing apparatuses 10 in the content sharing system 100 in accordance with the present embodiment is described with reference to a timing chart of FIG. 20.

First, at step S202 the group registration requesting section 120 of a content processing apparatus 10A issues a request for group registration to the distribution and group management server 20. More particularly, the group registration requesting section 120 produces group registration cancellation requesting information (for example, a group registration cancellation requesting notification, a user ID, a credit card number, an apparatus ID, and so forth) in response to user inputs and transmits the group registration cancellation requesting information via network 5 to the distribution and group management server 20 .

Then, at step S204 the user authentication section 234 of the distribution and group management server 20 performs an authentication process of the user who owns the content processing apparatus 10A of the source of the registration cancellation request. The user authentication process is typically performed based on whether or not user account information included in the received group registration cancellation requesting information and user account information of the group registration database 216 coincide with each other. If the user authentication is performed successfully, then the processing advances to step S206.

At step S206, the apparatus registration section 236 of the distribution and group management server 20 places the registration of the content processing apparatus 10A of the source of the registration cancellation request out of the apparatus group of the authenticated user. More particularly, the apparatus registration section 236 deletes the apparatus ID (terminal ID or medium ID) of the content processing apparatus 10 of the source of the registration cancellation request and the group ID from the columns for the apparatus IDs 2164 and the group ID of the group registration database 216.

Then, at step S208 the distribution and group management server 20 produces and transmits a registration cancellation completion notification to the content processing apparatus 10A whose registration has been cancelled.

Then, at step S210 the group ID addition/deletion section 189 of the content processing apparatus 10A deletes or invalidates all of the recorder IDs and the group IDs other than the recorder ID of the content processing apparatus 10A itself included in the reproduction permission ID list L. Consequently, the content processing apparatus 10A can thereafter reproduce only production content data produced by the content processing apparatus 10A itself and content data that is not an object of copyright management.

On the other hand, in order to cancel the group registration of a content processing apparatus 10B, such as a recording device, or a content processing apparatus 10C, such as a PD, the content processing apparatus 10B or 10C of an object of registration cancellation is connected, for example, locally to a content processing apparatus 10A owned by the same user and placed in the group registration already so that the cancellation is performed through the content processing apparatus 10A similarly as in the registration process.

The group registration and group registration cancellation processes of a content processing apparatus 10 are performed in such a manner as described above. Also if the owner of the same content processing apparatus 10 changes, a group changing operation of the content processing apparatus 10 can be performed by registration cancellation and re-registration in accordance with the processes.

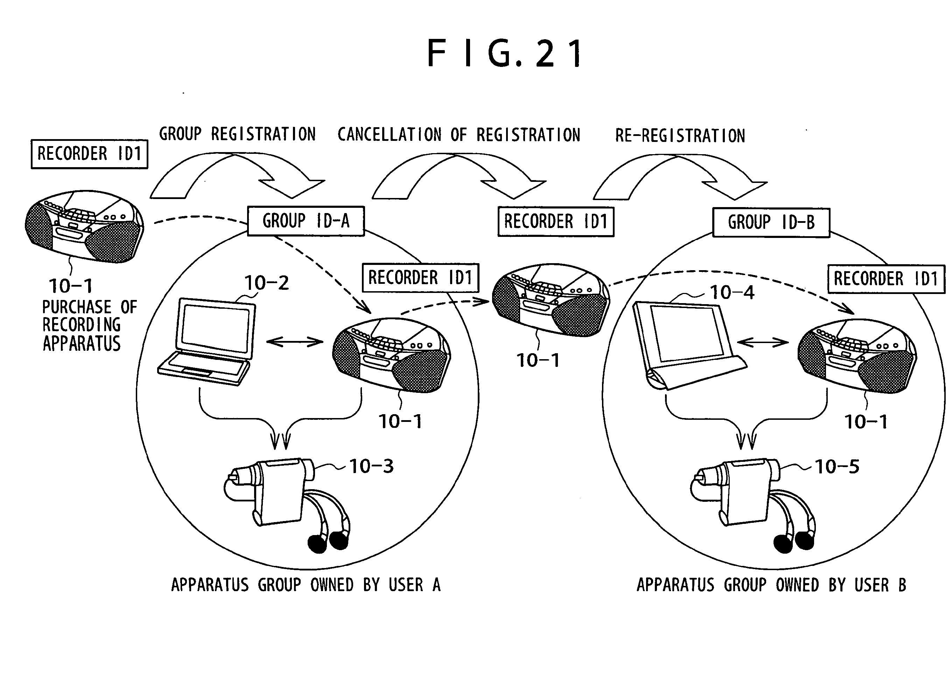

Referring to FIG. 21, a user A who newly purchases a content processing apparatus 10-1 having a content recording function would register the content processing apparatus 10-1 into an apparatus group owned by user A. Then, if the owner of the content processing apparatus 10-1 changes from user A to another user B, the content processing apparatus 10-1 is placed out of the registration of user A's apparatus group into an initial state and then re-registered into user B's apparatus group. In this manner, even if the owner user changes, the content processing apparatus 10-1 having a content recording function can be coordinated with a plurality of group IDs while the recorder ID1 of the content processing apparatus 10-1 is maintained.

Further, production content data recorded by the content processing apparatus 10-1 itself and placed in the group registration can be shared, including production content data produced before the group registration is performed. More particularly, in the example of FIG. 21, content processing apparatus 10-4 and 10-5 included in the apparatus group of the user B in which the content processing apparatus 10-1 is registered can reproduce production content data even if the production content data is recorded by the content processing apparatus 10-1 within a period prior to the registration of the content processing apparatus 10-1 into the apparatus group of the user B. This improves the convenience to a user of a content processing apparatus 10B such as a recording device and promotes the benefit of purchase.

### (Certificate Distribution Process DP-1)

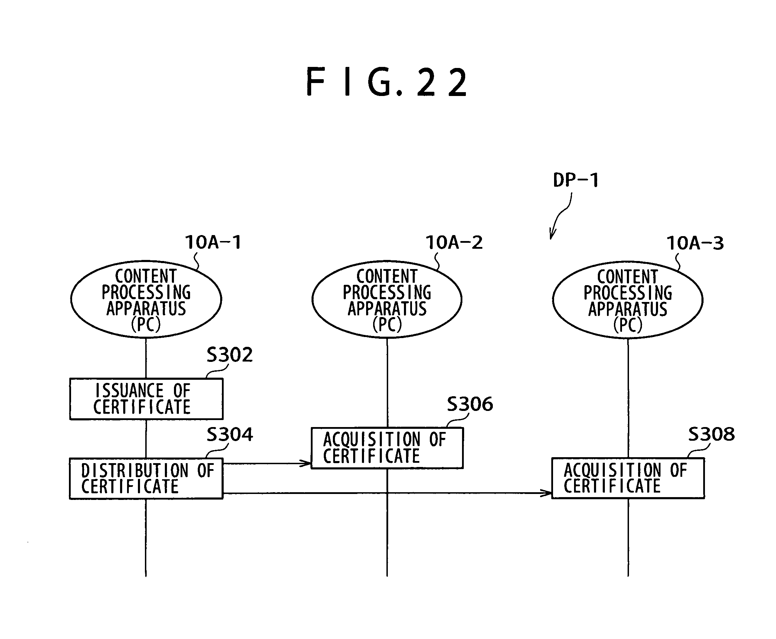

Now, a certificate distribution process DP-1 in the content sharing system 100 in accordance with the present embodiment is described with reference to a timing chart of FIG. 22.

In accordance with the certificate distribution process DP-1, a content processing apparatus 10A-1, such as a PC that can issue a certificate, distributes a group certificate G issued thereby directly to the other content processing apparatuses 10A-2 and 10A-3.

First, at step S302 the certificate issuing section 190 of the content processing apparatus 10A-1 issues a group certificate G. The group certificate G issued in this instance coordinates the recorder ID corresponding to the content processing apparatus 10A-1 with the group ID of the apparatus group to which the content processing apparatus 10A-1 belongs (that is, the group ID applied to the user who owns the content processing apparatus 10A-1).

Then, at step S304 the content processing apparatus 10A-1 distributes the group certificate G directly to the other content processing apparatuses 10A-2 and 10A-3. The method of distribution of the group certificate G in this instance may be, for example, transmission via the network 5 or a local line 9, or provision through a recording medium 7 on which the group certificate G is recorded.

Then, at steps S306 and S308 the content processing apparatuses 10A-2 and 10A-3 acquire the group certificate G distributed from the content processing apparatus 10A-1.

In this manner, in the certificate distribution process DP-1, the content processing apparatus 10-1 (typically a PC), which can issue a certificate, performs a process of issuing a group certificate G corresponding to the recorder ID of the content processing apparatus 10-1 and a group ID and directly distributing the group certificate G to the other content processing apparatuses 10A-2 and 10A-3. Consequently, based on the acquired group certificate G the content processing apparatuses 10A-2 and 10A-3 can execute an updating process of the reproduction permission ID lists L thereof.

It is to be noted that the group certificate G of the content processing apparatus 10A-1, issued by the content processing apparatus 10A-1 itself, may otherwise be distributed to the other content processing apparatuses 10A-2 and 10A-3 through the distribution and group management server 20. In this instance, since the group certificate G can be distributed even if the content processing apparatuses 10 are not connected to each other (not connected locally or via the network 5), each of the content processing apparatuses 10 owned by the same user but located remotely from each other can add the group ID of the other content processing apparatuses 10 to the reproduction permission ID list L.

### (Certificate Distribution Process DP-2)

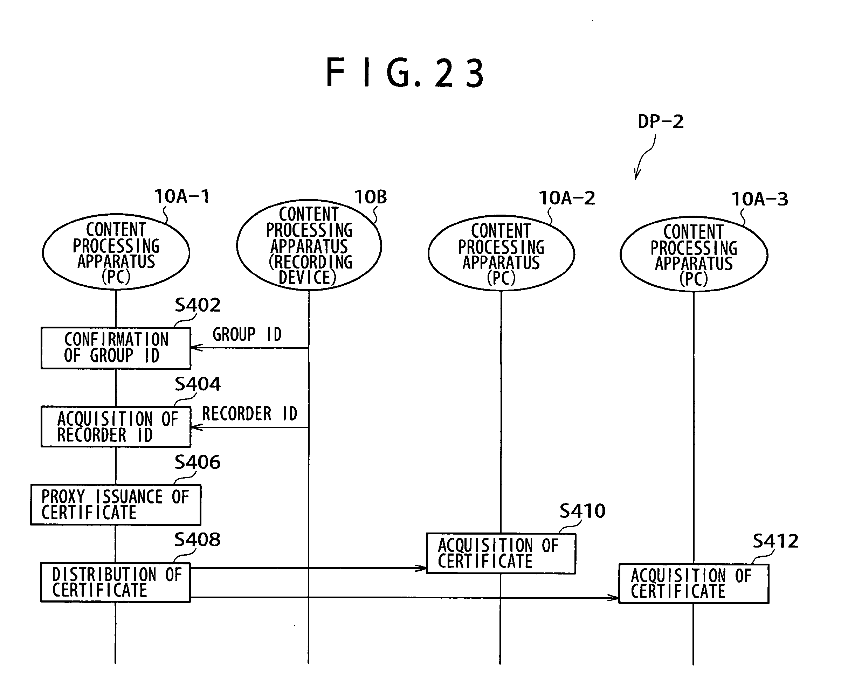

Now, a certificate distribution process DP-2 in the content sharing system 100 in accordance with the present embodiment is described with reference to a timing chart of FIG. 23.

In accordance with the certificate distribution process DP-2, a content processing apparatus 10A-1, such as a PC that can issue a certificate, representatively issues a group certificate G relating to a content processing apparatus 10B, such as a recording device that cannot issue a certificate, and distributes the group certificate G to the other content processing apparatuses 10A-2 and 10A-3.

First, at step S402 the content processing apparatus 10A-1, connected to the content processing apparatus 10B, confirms the group ID possessed by the content processing apparatus 10B. The content processing apparatus 10A-1 acquires and directly distributes the group ID to the other content processing apparatuses 10A-2 and 10A-3. More particularly, the content processing apparatus 10-1 is connected to the content processing apparatus 10B, for example, by means of a local line 9, and reads out the group ID possessed by the content processing apparatus 10B. Then, the content processing apparatus 10-1 determines whether or not the read out group ID coincides with the group ID possessed by the content processing apparatus 10A-1. If they coincide with each other, then the processing advances to step S404, but if they do not coincide with each other, then the certificate issuance process is ended.

At step S404 the content processing apparatus 10A-1 acquires the recorder ID of the content processing apparatus 10B. More particularly, the content processing apparatus 10A-1 reads out the recorder ID corresponding to the content processing apparatus 10B stored in the reproduction permission ID list L of the content processing apparatus 10B locally connected thereto.

Then, at step S406 the content processing apparatus 10A-1 proxy issues a group certificate G relating to the content processing apparatus 10B. More particularly, the certificate issuing section 190 of the content processing apparatus 10A-1 issues a group certificate G wherein the group ID and the recorder ID acquired from the content processing apparatus 10B at steps S402 and S404 described above, respectively, are coordinated with each other. The group certificate G corresponds not to the content processing apparatus 10A-1 but to the content processing apparatus 10B.

Then, at step S408 the content processing apparatus 10A-1 directly distributes the group certificate G to the content processing apparatuses 10A-2 and 10A-3.

Then, at steps S410 and S412 the content processing apparatuses 10A-2 and 10A-3 acquires the group certificate G distributed from the content processing apparatus 10A-1.

In this manner, in the certificate distribution process DP-2, the content processing apparatus 10-1 (such as, for example, a PC), which can issue a certificate, can proxy issue a group certificate G corresponding to the record ID and the group ID of the another content processing apparatus 10B belonging to the same apparatus group and distribute the group certificate G to the other content processing apparatuses 10A-2 and 10A-3. Consequently, a notification of the recorder ID of the content processing apparatus 10B, which cannot issue a group certificate G, can be issued with safety to the content processing apparatuses 10 in the content sharing system 100.

### (Certificate Distribution Process DP-3)

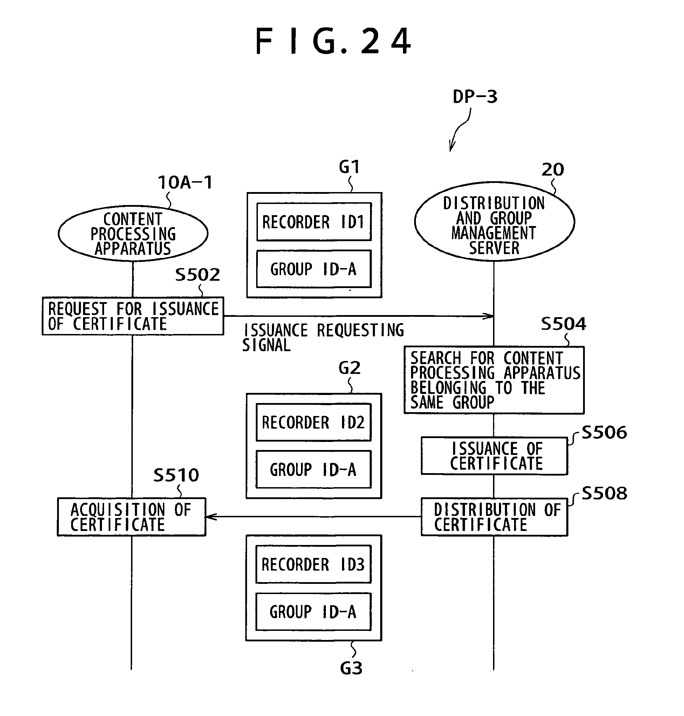

Now, a certificate distribution process DP-3 in the content sharing system 100 in accordance with the present embodiment is described with reference to a timing chart of FIG. 24.

In accordance with the certificate distribution process DP-3, a content processing apparatus 10A-1 registered in a certain apparatus group receives from the distribution and group management server 20 a distributed group certificate G relating to another content processing apparatus 10 registered in the same apparatus group.

First, at step S502 the content processing apparatus 10A-1 issues a request to the distribution and group management server 20 for issuance of a group certificate G relating to another content processing apparatus 10-1 registered in the same apparatus group. More particularly, the certificate issuance requesting section 181 of the content processing apparatus 10A-1 transmits a group certificate G1, which includes the group ID-A and the recorder ID1 of the content processing apparatus 10-1, and a certificate issuance requesting signal to the distribution and group management server 20. It is to be noted that, at the present step S502, it is required to transmit at least only a certificate issuance requesting signal and the group ID-A, but the group certificate G1 need not necessarily be transmitted.

Then, at step S504 the distribution and group management server 20 searches for the recorder IDs with a recording function registered in the same apparatus group as the content processing apparatus 10A-1 of the source of the request for issuance. More particularly, the certificate management section 242 of the content processing apparatus 10A-1 reads out, in response to reception of the group certificate G and the certificate issuance requesting signal from the content processing apparatus 10A-1, the group ID-A and the recorder ID1 from the received group certificate G. Then, the certificate management section 242 searches the group registration database 216 or the certificate database 219 using the group ID-A as a search term to search for a recorder ID coordinated with the same group ID-A. It is assumed here that the recorder IDs ID2 and ID3 are searched out. Further, the certificate management section 242 issues a notification of the recorder IDs ID2 and ID3 of the object of the search to the certificate issuing section 240.

Further, at step S506 the distribution and group management server 20 issues one or more group certificates G corresponding to the certificate issuance request. More particularly, the certificate issuing section 240 of the distribution and group management server 20 issues group certificates G1 and G2, which include the recorder IDs ID2 and ID3 received from the certificate management section 242, respectively. In this issuing process, each group certificate G may be produced newly or past group certificates G stored in the certificate database 219 may be read out.

Then, at step S508 the distribution and group management server 20 distributes the one or more (for example, two) group certificates G, issued as described above, to the content processing apparatus 10A-1. More particularly, the certificate issuing section 240 of the distribution and group management server 20 transmits via network 5 the group certificates G1 and G2, issued as described above, to the content processing apparatus 10A-1.

Then, at step S510 the content processing apparatus 10A-1 acquires the group certificates G distributed from the distribution and group management server 20.

In this manner, in the certificate distribution process DP-3, the content processing apparatus 10A-1 can acquire the recorder IDs ID2 and ID3 of the content processing apparatus 10-1 registered in the apparatus group same as that of the content processing apparatus 10A-1 itself with safety and add them to the reproduction permission ID list L of the content processing apparatus 10A-1 itself. Particularly since the distribution and group management server 20 manages group certificates G in a concentrated manner, the content processing apparatus 10-1 can rapidly and readily acquire all recorder IDs, which reflect the latest group registration situation in the apparatus group of the content processing apparatus 10-1.

It is to be noted that the certificate distribution process DP-3 can be applied such that, if the content processing apparatus 10A-1 cannot reproduce production content data that is an object of a reproduction request received, it can be connected to the distribution and group management server 20 to acquire a group certificate G and update the reproduction permission ID list L thereof with the group certificate G, and then try to reproduce the production content data again.

### (List Updating Process UP-1)

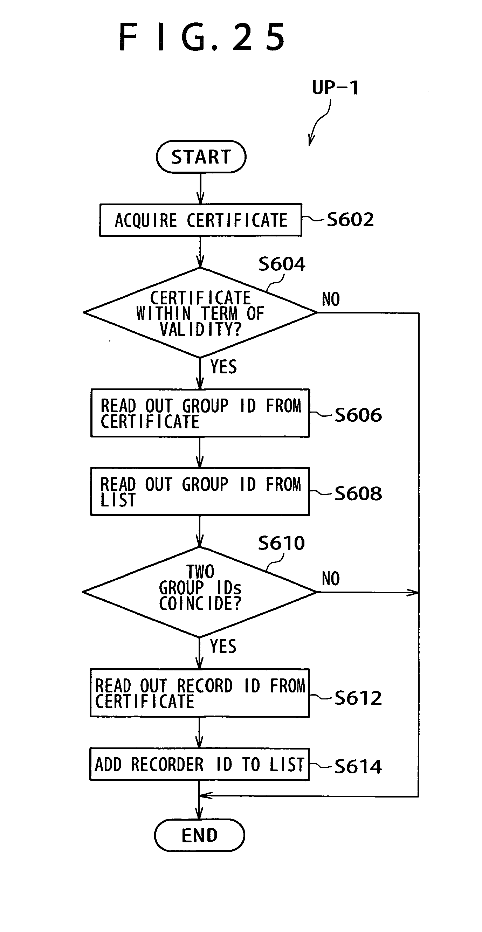

Now, a list updating process UP-1 of a content processing apparatus 10 (content reproduction apparatus) of the content sharing system 100 in accordance with the present embodiment is described with reference to a flow chart of FIG. 25. In the list updating process UP-1, a content processing apparatus 10 acquires a group certificate G distributed thereto and updates the reproduction permission ID list L thereof or the reproduction permission ID list L of another content processing apparatus 10 based on the acquired group certificate G.

First, at step S602 the content processing apparatus 10 acquires a group certificate G distributed from another content processing apparatus 10 or from the distribution and group management server 20. In this instance, the content processing apparatus 10 may receive a group certificate G via the network 5 or a local line 9, may read out a group certificate G recorded on a recording medium 7, or else read out a group certificate G embedded in content data.

Then, at step S604 the content processing apparatus 10 determines whether or not the acquired group certificate G remains within its term of validity. More particularly, the list updating section 184 of the content processing apparatus 10 first reads out valid term information included in the group certificate G and acquires present time information from a clock apparatus (not shown) built therein. Then, the list updating section 184 determines whether or not the present time is within the term of validity of the group certificate G-that is, whether or not the group certificate G is within the term of validity. If a result of the determination indicates that the group certificate G is within the term of validity, then the processing advances to step S606. If the group certificate G is not within the term of validity, however, then updating of the list is rejected and the list updating process is ended.

At step S606, the list updating section 184 reads out a group ID (second group ID) included in the acquired group certificate G.

Then, at step S608 the list updating section 184 reads out the group ID (first group ID) possessed by the content processing apparatus 10 itself. In the present embodiment, since the content processing apparatus 10 stores the group ID in the reproduction permission ID list L in the storage apparatus 114, the list updating section 184 reads out a group ID corresponding to the content processing apparatus 10 from the reproduction permission ID list L.

Then, at step S610 the list updating section 184 determines whether or not the second group ID read out from the acquired group certificate G and the first group ID corresponding to the content processing apparatus 10 coincide with each other. If a result of the determination indicates that the first group ID and the second group ID coincide with each other, then updating of the list is permitted and the processing advances to step S612. In this instance, since the content processing apparatus 10 corresponding to the recorder ID included in the group certificate G and the content processing apparatus 10 itself possess the same group ID, it can be determined that they belong to the same apparatus group, and therefore, updating of the list is permitted. On the other hand, if the first group ID and the second group ID are different from each other, then updating of the list is rejected and the list updating process is ended.

At step S612, the list updating section 184 adds the recorder ID included in the group certificate G to the reproduction permission ID list L. More particularly, the list updating section 184 reads out a recorder ID from the acquired group certificate G and writes the recorder ID into the reproduction permission ID list L. Consequently, the content processing apparatus 10 is thereafter permitted to reproduce content data to which the recorder ID is added.

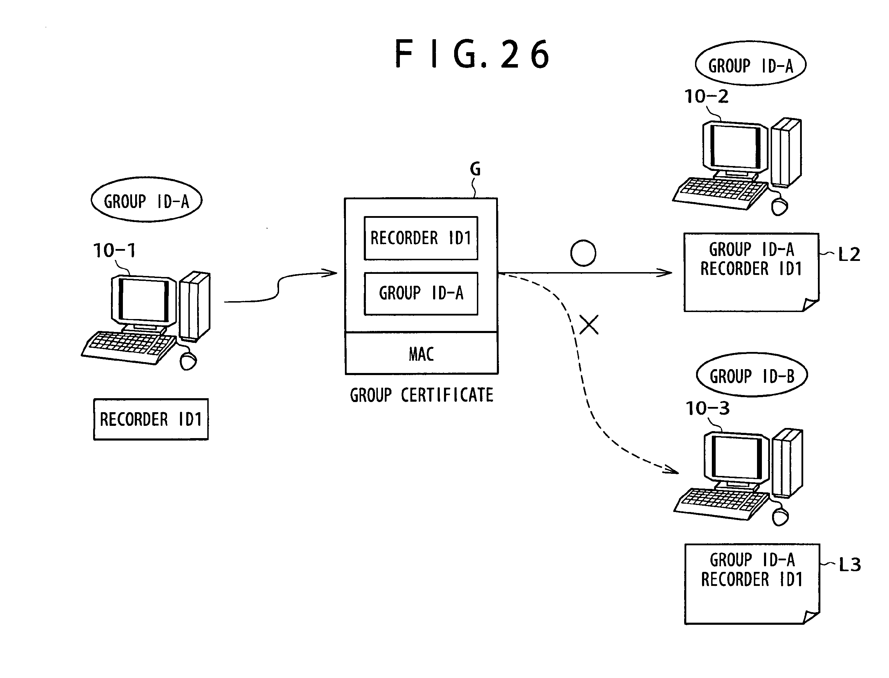

Here, a particular example of an application of the list updating process 1 described above is described with reference to FIG. 26. It is to be noted that, in the example of FIG. 26, a group certificate G has no term of validity set therein.

A content processing apparatus 10-1 and another content processing apparatus 10-2 are registered in the same apparatus group and have the same group ID-A. On the other hand, a further content processing apparatus 10-3 is registered in an apparatus group different from that of the content processing apparatus 10-1 and 10-2 and has a group ID-B different from the group ID-A.

In this instance, the group certificate G issued from the content processing apparatus 10-1 includes the recorder ID1 and the group ID-A of the content processing apparatus 10-1. The content processing apparatus 10-2 acquires the group certificate G just described and can add the recorder ID1 included in the group certificate G to the reproduction permission ID list L2 of the content processing apparatus 10-2 itself because the group ID-A included in the group certificate G and the group ID-A of the content processing apparatus 10-2 itself coincide with each other. On the other hand, since the group ID-A included in the group certificate G and the group ID-B of the content processing apparatus 10-3 which has acquired the group certificate G are different from each other, the content processing apparatus 10-3 cannot add the recorder ID1 included in the group certificate G to the reproduction permission ID list L3 of the content processing apparatus 10 itself.

In this manner, in the list updating process UP-1 in the present embodiment, if an apparatus group to which a content processing apparatus 10 belongs and an apparatus group indicated by a group certificate G coincide with each other, the recorder ID included in the group certificate G can be added to the reproduction permission ID list L so that production content of the content processing apparatus 10 of the recorder ID can be shared.

It is to be noted that, while an example wherein a content processing apparatus 10A, such as a PC, updates the reproduction permission ID list L of the content processing apparatus 10A itself is described above, the reproduction permission ID list L possessed by a content processing apparatus 10B or 10C, such as a recording device, a PD, or the like, may be updated by a content processing apparatus 10A, such as a PC, connected thereto via a local line 9 or the like.

### (List Updating Process UP-2)

Now, a list updating process UP-2 of a content processing apparatus 10 (content reproduction apparatus) of the content sharing system 100 in accordance with the present embodiment is described with reference to a flow chart of FIG. 27. In the list updating process UP-2, a content processing apparatus 10 synchronizes the reproduction permission ID lists L of the content processing apparatus 10 itself and another content processing apparatus 10 so as to update the reproduction permission ID lists L.

First, at step S702 a content processing apparatus 10-1 and a different content processing apparatus 10-2 are connected to each other via the network 5 or a local line 9. Consequently, the content processing apparatuses 10-1 and 10-2 can thereafter access each other.

Then, at step S704 the list synchronization section 186 of the content processing apparatus 10-1 acquires the recorder ID2 possessed by the different content processing apparatus 10-2. More particularly, the content processing apparatus 10-1 requests the content processing apparatus 10-2 to read out the group ID from the reproduction permission ID list L of the different content processing apparatus 10-2 and transmit the group ID to the content processing apparatus 10-1.

At step S706, the list synchronization section 186 of the content processing apparatus 10-1 determines whether or not the group ID (first group ID) possessed thereby and the acquired group ID (second group ID) of the different content processing apparatus 10-2 coincide with each other. If a result of the determination indicates that the first and second group IDs coincide with each other, then updating of the list is permitted and the processing advances to step S708. On the other hand, if the first and second group IDs are different from each other, then updating of the list is rejected and the list updating process is ended.

At step S708, the list synchronization section 186 synchronizes the reproduction permission ID list L1 of the content processing apparatus 10-1 and the reproduction permission ID list L2 of the different content processing apparatus 10-2 with each other. More particularly, the list synchronization section 186 merges recorder IDs included in the reproduction permission ID list L1 and recorder IDs included in the reproduction permission ID list L2 and writes the resulting recorder IDs into the reproduction permission ID lists L1 and L2 of the two content processing apparatuses 10-1 and 10-2. As a result, the recorder IDs included in the reproduction permission ID lists L of the two content processing apparatuses 10 become identical with each other.

The certificate distribution process UP-2 described above is useful to connect a content processing apparatus 10A, such as a PC, and a content processing apparatus 10B or 10C, such as a recording device, a PD or the like, to each other such that the reproduction permission ID list L of the content processing apparatus 10B or 10C is updated by the content processing apparatus 10A side.

### (Production Content Reproduction Control Process)

Now, a production content reproduction control process by a content processing apparatus 10 (content reproduction apparatus) of the content sharing system 100 in accordance with the present embodiment is described with reference to a flow chart of FIG. 28.

First, at step S802 a reproduction request would be issued by the user. In particular, the user would operate the inputting apparatus 106 of the content processing apparatus 10 to select desired production content data and give an instruction to the content processing apparatus 10 to reproduce the selected production content data.

Then, at step S804 the recorder ID added to the production content data is read out. In particular, the content reproduction section 170 of the content processing apparatus 10-1 reads out the production content data of an object of the request for reproduction from the storage apparatus 114, a recording medium 7, or the like, and extracts and interprets the recorder ID added to the read out production content data.

At step S806, the content processing apparatus 10 determines whether or not the recorder ID thus read out is included in the reproduction permission ID list L thereof. More particularly, the reproduction control section 172 of the content reproduction section 170 determines whether or not the recorder ID read out from the production content data is included in the reproduction permission ID list L read out from the storage apparatus 114. If a result of the discrimination indicates that the recorder ID read out from the production content data is included in the reproduction permission ID list L, then the reproduction control section 172 permits reproduction of the production content data, and the processing advances to step S814. On the other hand, if the recorder ID read out from the production content data is not included in the reproduction permission ID list L, then the reproduction control section 172 rejects reproduction of the production content data, and the processing advances to step S808.

At step S808, the content processing apparatus 10 issues a request for issuance of a group certificate G corresponding to the recorder ID read out from the production content data. More particularly, if reproduction is rejected as described above, then the certificate issuance requesting section 181 of the reproduction control section 172 issues a request for issuance of a group certificate G that includes the recorder ID. The destination of the request for issuance in this instance may be any apparatus that can issue a group certificate G that includes the recorder ID, such as the distribution and group management server 20, another content processing apparatus 10 corresponding to the recorder ID, or a network server.

Then, at step S810 an updating process of the reproduction permission ID list L is performed. In particular, in response to the request for issuance of a group certificate G at step S808, described above, the distribution and group management server 20, another content processing apparatus 10, or the like, issues a group certificate G that includes the recorder ID. When the content processing apparatus 10-1 of the source of the request for issuance acquires the group certificate G thus issued, it executes such a list updating process 1 as described above with reference to FIG. 25.

At step S812, if the recorder ID read out from the production content data is added to the reproduction permission ID list L as a result of the list updating process at step S810, then the processing advances to step S814. On the other hand, if the recorder ID is not added to the reproduction permission ID list L, then reproduction is rejected and the reproduction control process is ended.

Thereafter, at step S814 the production content data is reproduced. As a result of such processes as described above, if a recorder ID added to production content data is included in the reproduction permission ID list L (step S806) or the recorder ID is added to the reproduction permission ID list L by the list updating process (step S812), then the content reproduction section 170 reproduces the production content data.

In this manner, the reproduction control of production content data is executed based on a recorder ID added to production content data, a reproduction permission ID list L and a group ID possessed by the content processing apparatus 10.

### (Distribution Content Reproduction Control Process)

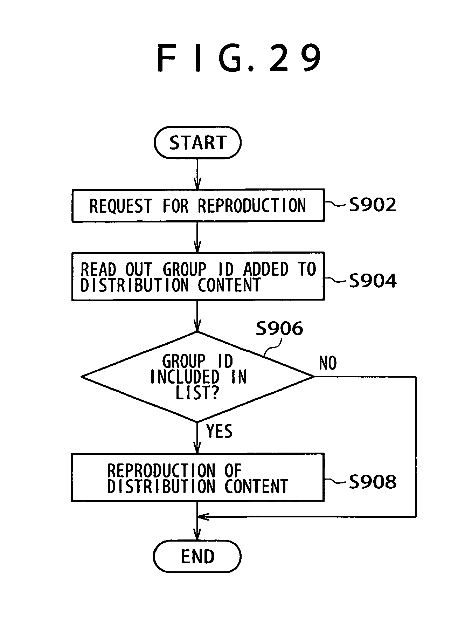

Now, a distribution content reproduction control process of a content processing apparatus 10 (content reproduction apparatus) of the content sharing system 100 in accordance with the present embodiment is described with reference to a flow chart of FIG. 29.

First, at step S902 a request for reproduction would be issued by the user. In particular, the user would operate the inputting apparatus 106 of the content processing apparatus 10 to select desired production content data and give an instruction to the content processing apparatus 10 to reproduce the selected production content data.

Then, at step S904 the group ID added to the distribution content data is read out. In particular, the content reproduction section 170 of the content processing apparatus 10-1 reads out the distribution content data of an object of the request for reproduction from the storage apparatus 114, a recording medium 7, or the like, and extracts and interprets the group ID added to the read out distribution content data.

Then, at step S906 it is determined whether or not the read out group ID is included in the reproduction permission ID list L of the content processing apparatus 10. More particularly, the reproduction control section 172 of the content reproduction section 170 determines whether or not the group ID read out from the distribution content data is included in the reproduction permission ID list L read out from the storage apparatus 114. If a result of the determination indicates that the group ID read out from the distribution content data is included in the reproduction permission ID list L, then the reproduction control section 172 permits reproduction of the distribution content data, and then the processing advances to step S908. On the other hand, if the group ID read out from the distribution content data is not included in the reproduction permission ID list L, then the reproduction control section 172 does not permit reproduction of the distribution content data, and the reproduction control process is ended.

At step S908, the distribution content data is reproduced. As a result of such processes as described above, if a group ID added to distribution content data is included in the reproduction permission ID list L, then the content reproduction section 170 reproduces the distribution content data.

In this manner, the reproduction control of distribution content data is executed based on a group ID added to the distribution content data and a reproduction permission ID list L. Although the group ID specifies an apparatus group to which the content processing apparatus 10-1 belongs (that is, an ID for a content sharing service), in the present embodiment, the group ID is utilized also for reproduction control of distribution content data. Consequently, distribution content data can be reproduced in all of the content processing apparatus 10 registered in the same group. However, the utilization of the group ID is not limited to such examples as described above, but the group ID, which is an ID for content sharing service, and the distributed service user ID, which is an ID for a content distribution service, may be used separately from each other. In this instance, the distribution service user ID may be added to distribution content data such that reproduction control of the distribution content data is performed similarly as described above based on the distributed service user ID.

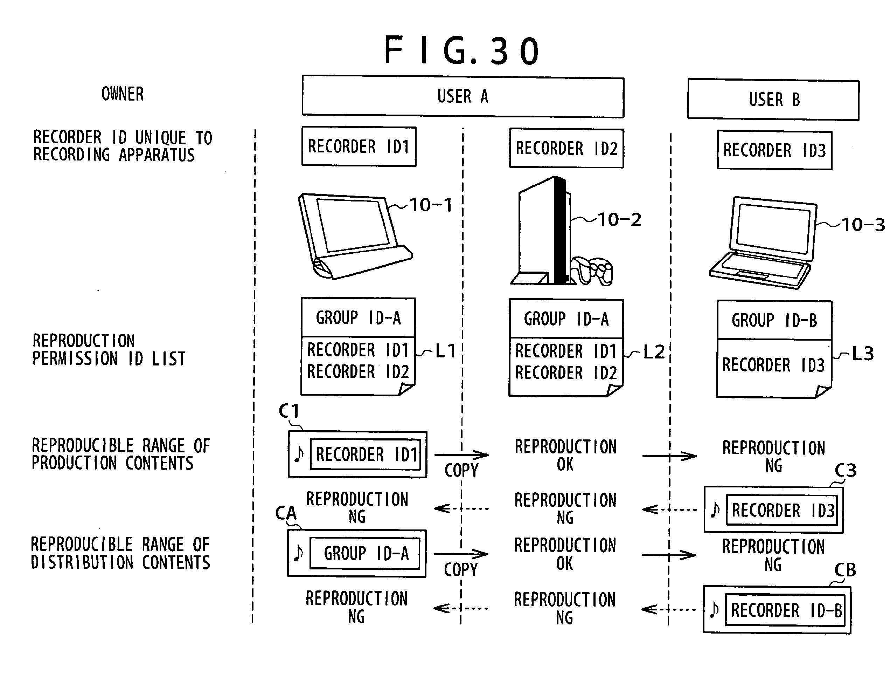

The reproduction control process of production content data and distribution content data is such as described above. Now, a particular example wherein the reproduction control process is applied is described with reference to FIG. 30.

Content processing apparatuses 10-1, 10-2, and 10-3 have recorder IDs ID1, ID2, and ID3 allocated thereto, respectively. Thus, the content processing apparatuses 10-1, 10-2, and 10-3 add and record the recorder IDs ID1, ID2, and ID3 to and together with content data produced thereby, respectively.

The content processing apparatuses 10-1 and 10-2 are registered in an apparatus group owned by a user A while the content processing apparatus 10-3 is registered in another apparatus group owned by another user B. Therefore, the group ID-A is added to distribution content data CA distributed to the content processing apparatuses 10-1 and 10-2, and the group ID-B is added to distribution content data CB distributed to the content processing apparatus 10-3.

The content processing apparatuses 10-1, 10-2, and 10-3 have reproduction permission ID lists L1, L2, and L3, respectively. Of the reproduction permission ID lists L1, L2, and L3, the reproduction permission ID lists L1 and L2 of the content processing apparatuses 10-1 and 10-2, which belong to the same apparatus group A, include the group ID-A, recorder ID1, and recorder ID2, and mutually share the recorder ID1 and the recorder ID2. On the other hand, the reproduction permission ID list L3 of the content processing apparatus 10-3, which belongs to the apparatus group B different from the apparatus group A, includes the group ID-B and the recorder ID3 but does not include any of the group ID-A, recorder ID1, and recorder ID2.

In such an instance, the content data C1 recorded by the content processing apparatus 10-1 and having the recorder ID1 added thereto can be reproduced by the content processing apparatus 10-2 because the recorder ID1 is included in the reproduction permission ID list L2.
However, the content data C1 cannot be reproduced by the content processing apparatus 10-3 because the recorder ID1 is not included in the reproduction permission ID list L3. On the other hand, the content data C3 recorded by the content processing apparatus 10-3 and having the recorder ID3 added thereto cannot be reproduced by any of the content processing apparatus 10-1 and 10-2 because the recorder ID3 is not included in any of the reproduction permission ID lists L1 and L2.

Further, the distribution content data CA to which the group ID-A is added can be reproduced by the content processing apparatuses 10-1 and 10-2 because the group ID-A is included in the reproduction permission ID lists L1 and L2. However, the distribution content data CA cannot be reproduced by the content processing apparatus 10-3 because the group ID-A is not included in the reproduction permission ID list L3. Meanwhile, the distribution content data CB to which the group ID-B is added can be reproduced by the content processing apparatus 10-3 because the group ID-B is included in the reproduction permission ID list L3. However, the distribution content data CB cannot be reproduced by any of the content processing apparatuses 10-1 and 10-2 because the group ID-B is not included in any of the reproduction permission ID lists L1 and L2.

In this manner, since the content processing apparatus 10-1 and the content processing apparatus 10-2 registered in the same apparatus group share a source ID, they can mutually reproduce production content data produced by them and distribution content data distributed thereto. Therefore, content can be shared freely between the content processing apparatuses 10-1 and 10-2. On the other hand, since the content processing apparatus 10-1 and the content processing apparatus 10-3 registered in different apparatus groups from each other do not share a source ID, they cannot mutually reproduce production content data and distribution content data. Therefore, sharing of content between the content processing apparatus 10-1 and 10-3 is limited.

The content sharing system 100 and the content sharing method of the same in accordance with the present embodiment are described in detail above. The content sharing system 100 described above can perform copyright management of content by managing content data shared by a plurality of content processing apparatuses 10 in terms of a unit of a content providing source (in terms of a unit of a user or an apparatus of the providing source) and limiting reproduction of content data by the content processing apparatuses 10 in accordance with the content providing source. In other words, the content sharing system 100 can permit/reject sharing of content data in terms of a unit of a content providing source.

Therefore, if a content providing source is an illegal content providing source, then a content processing apparatus 10 on the content acquiring side can collectively inhibit reproduction of all content data acquired from the illegal content providing source. Accordingly, such illegal actions as mass distribution of content data to unspecified majority users and another action of laying distribution content data open for downloading on the Internet can be prevented effectively.

On the other hand, if a providing source of content is a legal content providing source, then once sharing of content data from the content providing source is permitted, any content data provided from the permitted content providing source can be reproduced freely, even if a plurality of content data are involved. Therefore, within the range of private use, content data can be copied freely between a plurality of content processing apparatuses 10. Consequently, copyright management proximate to that by a conventional analog content distribution system which acknowledges unlimited copying for private utilization can be implemented.

From the foregoing, the content sharing system 100 in accordance with the present embodiment described above can achieve both of (1) implementation of a copyright management function of restricting an action of illegally utilizing content data without payment of a proper consideration for a content distribution service or the like, and (2) avoidance of obstruction of utilization of content within the range of private use with a proper consideration paid.

Further, it is necessary in principle for a copyright management process of permitting sharing of content data in a unit of a content providing source to be performed only once upon registration, or upon first distribution of a content distribution service, or upon utilization of content data from a new content providing source. Accordingly, the content sharing system 100 in accordance with the present embodiment described above can achieve improvement in efficiency of the copyright management process when compared with a conventional system wherein a copyright management process is executed every time copying of content is performed.

Further, where list management is performed in each content processing apparatus 10 as in the embodiment described above, since there is no necessity for a system for managing the numbers of copies of content data in a concentrated manner, the degree of freedom in designing the user interface or the content processing apparatus 10 can be raised. More particularly, (1) there is no necessity to use special means for copying and backup of content data; (2) since there is no necessity to use a user interface for exclusive use, such an interface as a content copying application or a content backup application for copyright management is not required; (3) there is no necessity for consideration of interruption of a service or crash of a system such as a management server or a personal computer that manages the numbers of copies in a concentrated manner; (4) there is no necessity for consideration of connections between the content processing apparatuses 10 that utilize content and a server for managing the copyright in a concentrated manner; and (5) since the necessary process can be executed only in the content processing apparatus 10 without using a management server, a high speed process can be anticipated.

Accordingly, where content data is shared using a plurality of content processing apparatuses within the range of private utilization, no restriction is required to the connection configuration between the apparatus or the performances of the apparatus, and therefore, the degree of freedom in designing can be raised.

Further, with the content sharing systems 100 in accordance with the embodiment described above, only by additionally recording a reproduction permission ID list L on an ordinary recording medium (removable medium) together with content data, a copyright management dealing function (that is, a function of licensing content only by sole circulation of a removable medium) can be added to the recording medium. Therefore, a recording medium with a copyright management dealing function can be designed readily. Further, by recording content having a source ID added thereto on a recording medium, copyright management can be performed in terms of a unit of a content provider even on the recording medium.

Furthermore, where content processing apparatuses 10 are registered in a group in terms of a unit of an owner of the content processing apparatuses 10, the content processing apparatuses 10 registered in the same apparatus group can freely copy and utilize content data between them. Therefore, a legal user who uses content privately can copy a content file freely between apparatus owned thereby and need not be aware of the source of copying or the number of times of copying of content, and therefore, is not likely to feel the presence of the copyright management system. Accordingly, within the range of private use, the degree of freedom in utilization of content by the user can be further raised to improve the convenience to the user.

Further, in the present embodiment, the distribution and group management server 20 can retain and collectively manage the latest group registration information and content sharing registration information. Further, authentication and sharing registration of content between those content processing apparatuses 10 whose direct interconnection is difficult can be performed via the distribution and group management server 20 and the network 5. Consequently, the content processing apparatuses 10 can have an equal relationship to each other.

The embodiment described above can be modified in various manners. For example, in the embodiment described above, a distribution server for providing a content distribution service and a group management server for performing user authentication and apparatus authentication for classifying apparatus into groups to provide a content sharing service are integrated with each other to form the distribution and group management server 20. However, they need not necessarily be formed as the integrated distribution and group management server 20 but may be formed in a different form. For example, the distribution server and the group management server may be provided as separate apparatuses from each other such that a content distribution service and a content sharing service are provided separately and independently from each other, respectively. In this instance, a user ID used for the content distribution service and the group ID may be formed as separate IDs from each other.

Further, the group certificate G may be issued only by the distribution and group management server 20. In this instance, each content processing apparatus 10 may transmit a recorder ID thereof to the distribution and group management server 20 upon accessing to the distribution and group management server 20.

Having described a preferred embodiment of the present invention with reference to the accompanying drawings, it is intended that the invention be not limited to the examples described above. It is apparent that various changes and modifications may be made within meets and bounds of the claims by those skilled in the art, and it is understood that all such changes and modifications be embraced within the technical scope of the present invention.

## Claims

1. A content sharing system (100), comprising:
a plurality of content processing apparatuses (10) for recording and/or reproducing content data; and
a group management server (20) for placing said content processing apparatuses (10) into group registrations;
the content data being shared between those of said content processing apparatuses (10) that are placed in the same group registration;
a recorder ID being applied uniquely in terms of a unit of a content recording apparatus that can record content data and a group ID being applied uniquely in terms of a unit of a user who owns any of said content processing apparatuses (10);
said group management server (20) including a user authentication section for authenticating, in response to a request for registration from any of said content processing apparatuses, a user who owns the content processing apparatus of the source of the request for registration, an apparatus registration section for registering the content processing apparatus of the source of the request for registration into the apparatus group owned by the authenticated user, and a group ID notification section for issuing a notification of the group ID corresponding to the authenticated user to the registered content processing apparatus;
said content processing apparatus (10) including a content recording apparatus that can record content data and a content reproduction apparatus that can reproduce content data;
said content recording apparatus including a content production section (130) for producing content data, and a recorder ID addition section (140) for adding the recorder ID of said content recording apparatus to the content data produced by said content production section;
said content reproduction apparatus including storage means (114) for storing a first group ID corresponding to a user who owns said content reproduction apparatus and a reproduction permission ID list, a list management section for determining whether or not a second group ID corresponding to a user who owns said content recording apparatus and the first group ID coincide with each other and adding, if the second group ID and the first group ID coincide with each other, the recorder ID of said content recording apparatus to the reproduction permission ID list, and a reproduction control section for reading out a recorder ID added to content data, determining whether or not the recorder ID read out is included in said reproduction permission ID list and permitting, if the recorder ID read out is included in said reproduction permission ID list, reproduction of the content data but limiting, if the recorder ID read out is not included in said reproduction permission ID list, reproduction of the content data.

2. A content reproduction apparatus (10) for controlling reproduction of content data based on a group ID applied uniquely in terms of a unit of a user who owns a content processing apparatus and a recorder ID applied uniquely in terms of a unit of a content recording apparatus that can record content data, comprising:
storage means (114) for storing a first group ID, corresponding to a user who owns said content reproduction apparatus, and a reproduction permission ID list;
a list management section (180) for determining whether or not a second group ID corresponding to a user who owns a different content recording apparatus and the first group ID coincide with each other and adding, if the second group ID and the first group ID coincide with each other, the recorder ID of said different content recording apparatus to the reproduction permission ID list; and
a reproduction control section (170) for reading out a recorder ID added to content data, determining whether or not the recorder ID read out is included in said reproduction permission ID list, and permitting, if the recorder ID read out is included in said reproduction permission ID list, reproduction of the content data but limiting, if the recorder ID read out is not included in said reproduction permission ID list, reproduction of the content data.

3. A content reproduction apparatus (10) in accordance with claim 2, further comprising a group registration requesting section (120) for issuing a request for group registration of said content reproduction apparatus to a group management server, which places content processing apparatuses into group registrations in terms of a unit of a user who owns any of said content processing apparatuses, and receiving a notification of the first group ID from said group management server.

4. A content reproduction apparatus (10) in accordance with claim 2 or 3, wherein said list management section (180) acquires a group certificate wherein the second group ID and the recorder ID of said different content recording apparatus from a group management server that places content processing apparatus into group registrations in terms of a unit of a user who owns any of said content processing apparatus or said different content recording apparatus, determines whether or not the second group ID included in the group certificate and the first group ID coincide with each other, and adds, if the second group ID and the first group ID coincide with each other, the recorder ID of said different content recording apparatus included in the group certificate to said reproduction permission ID list.

5. A content reproduction apparatus (10) in accordance with claim 4, wherein the group certificate includes valid term information representative of a term of validity within which the recorder ID included in the group certificate can be added to said reproduction permission ID list, and said list management section determines, based on the valid term information, whether or not the group certificate is within the term of validity and can add, if the group certificate is within the term of validity, the recorder ID of said different content recording apparatus included in the group certificate to said reproduction permission ID list.

6. A content reproduction apparatus (10) in accordance with claim 4 or 5, wherein said list management section synchronizes, when the group ID corresponding to the user who owns said different content processing apparatus and the first group ID coincide with each other, the reproduction permission ID list of said different content recording apparatus and said reproduction permission ID list of said content reproduction apparatus.

7. A content reproduction apparatus (10) in accordance with one of the claims 2 to 6, wherein a group ID is added to distribution content data distributed from a distribution server to any of said content processing apparatuses, and said reproduction control apparatus reads out the group ID added to the distribution content data, permits, if the group ID read out and the first group ID coincide with each other, reproduction of the distribution content data, but limits, if the group ID read out and the first group ID do not coincide with each other, reproduction of the distribution content data.

8. A content reproduction apparatus (10) in accordance with claim 7, wherein said reproduction permission ID list further includes the first group ID.

9. A content reproduction apparatus (10) in accordance with one of the claims 2 to 8, wherein said content reproduction apparatus is formed as a content recording and reproduction apparatus that can record and reproduce content data, and further comprises a content production section for producing content data, and a recorder ID addition section for adding the recorder ID of said content production apparatus to the content data produced by said content production section.

10. A content reproduction apparatus (10) in accordance with claim 9, wherein said reproduction permission ID list includes the recorder ID of said content reproduction apparatus.

11. A content reproduction apparatus(10) in accordance with claim 9 or 10, further comprising a certificate issuing section for issuing a group certificate wherein the first group ID and the recorder ID of said content reproduction apparatus are coordinated with each other.

12. A content recording apparatus (10) that can record content data, comprising:
storage means (114) for storing a first group ID, corresponding to a user who owns said content recording apparatus, from among group IDs applied uniquely in terms of a unit of a user who owns a content processing apparatus, and a recorder ID of said content recording apparatus from among recorder IDs applied uniquely in terms of a unit of a content recording apparatus;
a content production section (130) for producing content data;
a recorder ID addition section (140) for adding the recorder ID of said content recording apparatus to the content data produced by said content production section; and
a certificate issuing section (190) for issuing a group certificate comprising the first group ID and the recorder ID of said content recording apparatus.

13. A content recording apparatus (10) in accordance with claim 12, further comprising a group registration requesting section (120) for issuing a request for group registration of said content recording apparatus to a group management server that places content processing apparatuses into group registrations in terms of a unit of a user who owns any of said content processing apparatuses, and for receiving a notification of the first group ID from said group management server.

14. A content recording apparatus (10) in accordance with claim 12 or 13, wherein said certificate issuing section adds a code for prevention of falsification to the group certificate.

15. A content recording apparatus (10) in accordance with claim 12, wherein said certificate issuing section adds, to the group certificate, valid term information representative of a term of validity within which the content processing apparatus that acquires the group certificate can add the recorder ID included in the group certificate to a reproduction permission ID list.

16. A group management server (20) for placing a plurality of content processing apparatuses (10) that record and/or reproduce content data into group registrations, comprising:
a recorder ID being applied uniquely in terms a unit of a content recording apparatus that can record content data among said content processing apparatuses (10) and a group ID being applied uniquely in terms of a unit of a user who owns any of said content processing apparatuses;
a user authentication section (234) for authenticating, in response to a request for registration from any of said content processing apparatuses, a user who owns the content processing apparatus of the source of the request for registration;
an apparatus registration section (236) for registering the content processing apparatus of the source of the request for registration into the apparatus group owned by the authenticated user;
a group ID notification section (238) for issuing a notification of the group ID corresponding to the authenticated user to the registered content processing apparatus; and
a certificate issuing section (240) for issuing a group certificate wherein a group ID, of which content recording apparatuses from among the registered content recording apparatus are notified, and the recorder IDs of the content recording apparatuses are coordinated with each other.

17. A group management server (20) in accordance with claim 16, wherein said apparatus registration section (236) sets an upper limit number of content processing apparatuses that can be registered in the same apparatus group.

18. A group management server (20) in accordance with claim 16 or 17, wherein said apparatus registration section (236) inhibits registration of any same one of said content processing apparatuses into different apparatus groups.

19. A group management server (20) in accordance with claim 16, 17 or 18, wherein said certificate issuing section (240) adds, to the group certificate, a code for prevention of falsification.

20. A group management server (20) in accordance with one of the claims 16 to 19, wherein said certificate issuing section (240) adds, to the group certificate, valid term information representative of a term of validity within which the content processing apparatus that acquires the group certificate can add, to a reproduction permission ID list, the recorder ID included in the group certificate.

21. A group management server (20) in accordance with one of the claims 16 to 20, wherein said group management server is formed also as a distribution server for distributing content data, and further comprising a group ID addition section for adding a group ID, corresponding to the authenticated user, to distribution content data to be distributed to said content processing apparatus.

22. A program for causing a content reproduction apparatus to execute:
a list updating process of determining whether or not a first group ID corresponding to a user who owns said content reproduction apparatus from among group IDs applied uniquely in terms of a unit of a user who owns any content processing apparatus and a second group ID corresponding to a user who owns a different content recording apparatus coincide with each other, and adding to a reproduction permission ID list, if the first group ID and the second group ID coincide with each other, a recorder ID of the different content recording apparatus from among recorder IDs applied uniquely in terms of a unit of a content recording apparatus that can record content data; and
a reproduction control process of reading out a recorder ID added to content data, determining whether or not the recorder ID read out is included in said reproduction permission ID list and permitting, if the recorder ID read out is included in said reproduction permission ID list, reproduction of the content data but limiting, if the recorder ID read out is not included in said reproduction permission ID list, reproduction of the content data.

23. A program for causing a content recording apparatus to execute:
a content production process of producing content data;
a recorder ID adding process of adding, to the content data produced by the content production process, a recorder ID of said content recording apparatus from among recorder IDs applied uniquely in terms of a unit of a content recording apparatus ; and
a certificate issuing process of issuing a group certificate in which a first group ID, corresponding to a user who owns said content recording apparatus from among group IDs applied uniquely in terms of a unit of a user who owns any content processing apparatus, and the recorder ID of said content recording apparatus are coordinated with each other.

24. A program for causing a group management server connected to content processing apparatuses to execute:
a user authentication process of authenticating, in response to a request for registration from any of said content processing apparatuses, a user who owns the content processing apparatus of the source of the request for registration;
an apparatus registration process of registering, into an apparatus group owned by the authenticated user, the content processing apparatus of the source of the request for registration;
a group ID notification process of issuing, to the registered content processing apparatus, a notification of a group ID corresponding to the authenticated user from among group IDs applied uniquely in terms of a unit of a user who owns any of said content processing apparatuses; and
a certificate issuing process of issuing a group certificate in which a group ID, of which content recording apparatuses from among the registered content recording apparatuses are notified, and the recorder IDs of the content recording apparatuses are coordinated with each other.

25. A content reproduction controlling method for controlling reproduction of content data by a content reproduction apparatus based on a group ID applied uniquely in terms of a unit of a user who owns any of content processing apparatus, a recorder ID applied uniquely in terms of a unit of a content recording apparatus that can record content data from among said content processing apparatus, and a reproduction permission ID list stored in said content reproduction apparatus, comprising:
acquiring a first group ID corresponding to a user who owns said content reproduction apparatus;
acquiring a second group ID corresponding to a user who owns a different content recording apparatus different from said content reproduction apparatus;
list updating comprising determining whether or not the first group ID and the second group ID coincide with each other and adding, if the first group ID and the second group ID coincide with each other, the recorder ID of the different content recording apparatus to a reproduction permission ID list; and
reproduction controlling comprising reading out a recorder ID added to content data, determining whether or not the recorder ID read out is included in said reproduction permission ID list, and permitting, if the recorder ID read out is included in said reproduction permission ID list, reproduction of the content data, but limiting, if the recorder ID read out is not included in said reproduction permission ID list, reproduction of the content data.

26. A content reproduction controlling method in accordance with claim 25, wherein acquiring the first group ID includes:
issuing, to a group management server that places said content processing apparatus into group registrations in terms of a unit of a user who owns any of said content processing apparatus, a request for group registration of said content reproduction apparatus; and
receiving a notification of the first group ID from said group management server.

27. A content reproduction controlling method according to claim 25 or 26, wherein acquiring the second group ID acquires, from a group management server that places said content processing apparatus into group registrations in terms of a unit of a user who owns any of said contents processing apparatus or said different contents recording apparatus, a group certificate comprising the second group ID and the recorder ID of said different content recording apparatus, and said list updatingincludes:
determining whether or not the second group ID included in the acquired group certificate and the first group ID coincide with each other; and
adding to said reproduction permission ID list, if the second group ID and the first group ID coincide with each other, the recorder ID of said different content recording apparatus included in the group certificate.

28. A content reproduction controlling method in accordance with claim 27, wherein the group certificate includes valid term information representative of a term of validity within which the recorder ID included in the group certificate can be added to said reproduction permission ID list, and said list updating includes:
determining, based on the valid term information, whether or not the acquired group certificate is within the term of validity; and
determining, if the group certificate is within the term of validity, whether or not the said group ID included in the acquired group certificate and the first group ID.

29. A content reproduction controlling method in accordance with one of the claims 25 to 28, further comprising determining whether or not the group ID, corresponding to the user who owns said different content processing apparatus, and the first group ID coincide with each other, and synchronizing, if the group ID, corresponding to the user who owns said different content processing apparatus, and the first group ID coincide with each other, the reproduction permission ID list of said different content recording apparatus and said reproduction permission ID list of said content reproduction apparatus.

30. A content reproduction controlling method in accordance with one of the claims 25 to 29, further comprising:
acquiring distribution content data to which a group ID is added; and
reading out the group ID added to the distribution content data whose reproduction is requested, determining whether or not the group ID read out coincides with the first group ID, and permitting, if the group ID read out and the first group ID coincide with each other, reproduction of the distribution content data, but limiting, if the group ID read out and the first group ID do not coincide with each other, reproduction of the distribution content data.

31. A content reproduction controlling method in accordance with one of the claims 25 to 30, wherein the reproduction controlling comprises issuing, to a group management server that places said content processing apparatus into group registrations in terms of a unit of a user who owns any of said content processing apparatus, if the recorder ID read out is not included in said reproduction permission ID list,, a request to issue a group certificate that includes the read out recorder ID.
